(19) Europäisches Patentamt
European Patent Office
Office européen des brevets

(11) **EP 1 791 350 B1**

(12) **EUROPEAN PATENT SPECIFICATION**

(45) Date of publication and mention
of the grant of the patent:
**12.09.2018 Bulletin 2018/37**

(51) Int Cl.:
***H04N 5/232*** *(2006.01)*

(21) Application number: **06255130.4**

(22) Date of filing: **04.10.2006**

(54) **Imaging apparatus having image blur suppression function**

Abbildungsapparat mit Unterdrückungsfunktion der Unschärfe

Appareil de prise d'image avec fonction de suppression du flou

(84) Designated Contracting States:
**DE FR GB**

(30) Priority: **07.10.2005 JP 2005294511**

(43) Date of publication of application:
**30.05.2007 Bulletin 2007/22**

(73) Proprietor: **Ricoh Company, Ltd.**
**Tokyo 143-8555 (JP)**

(72) Inventors:
• **Serikawa, Yoshio**
**Tokyo 143-8555 (JP)**
• **Irisawa, Shigeru**
**Tokyo 143-8555 (JP)**

(74) Representative: **J A Kemp**
**14 South Square**
**Gray's Inn**
**London WC1R 5JJ (GB)**

(56) References cited:
**JP-A- 2001 066 655    JP-A- 2004 040 298**
**JP-A- 2004 274 242    US-A- 5 153 633**
**US-A- 6 047 133    US-A1- 2005 195 286**

**EP 1 791 350 B1**

**Description**

The present invention relates to an imaging apparatus which images a subject image onto an image pick-up device for generating image data so as to photograph the image of subject, particularly, to an imaging apparatus having a function for suppressing an image blur to be capable of photographing an image of subject that the image blur is suppressed by means of moving an image pick-up device to follow the subject image moved by a camera shake.

For a digital camera as one example of imaging apparatus having a function for suppressing an image blur, there has been known a structure that a CCD as an image pick-up device is mounted on a mounting stage provided in one end of a fixation casing for housing a lens barrel on the photographing axis, the mounting stage is movably provided within the X-Y plane orthogonal to the photographing optical axis as an Z-axis direction and the mounting stage is moved by magnetic force resulted from a permanent magnet and a coil facing thereto. With this camera, inclination in the Y-direction and X-direction is detected by using a camera shake detection sensor, and the movement of CCD is controlled by changing the electric current to be distributed to the coil according to the detection output, so as to move the CCD to follow the image of subject moved by the camera shake (for example, reference to JP2004-274242A).

JP 2004 040298 discloses a digital camera with a camera-shake correction function in which, when the camera-shake correction function is turned on, the center position of an image circle is made coincident with the image center position.

With the above camera, an origin which is the intersection of the X-Y plane with the Z-axis is used as the center of movable area of the mounting stage, so as to perform the image blur suppression with an origin position that the origin conforms to the optical center of the CCD as a reference. However, it is not possible to have the infinite movable area of mounting stage, so it is preferable for the CCD to locate in the origin position when starting the image blur suppression.

Consequently, it is considered to constantly locate the CCD in the original position by using magnetic force resulted from a permanent magnet and coil when the image blur suppression is not performed. However, it is necessary to keep applying the electric current to the coil, so the power consumption is increased.

For this reason, it is considered for a digital camera having a function for suppressing an image blur to attach a mounting stage onto a back plane of fixation casing so as to be movable with in the X-Y plane, and to use an equilibrium position of spring force by a pitch coil spring and gravity applied to the mounting stage as a position for starting the image blur suppression (for example JP-H04-039616A). With this camera, the image blur suppression can be immediately started while reducing the power consumption when the image blur suppression is not performed.

However, since the above camera having a function for suppressing an image blur has the mounting stage supported by the pitch coil spring, the mounting stage is displaced by the shaking of camera, for example. When starting the image blur suppression, the mounting stage is likely to be placed in the limit position of movable area, i.e., in the end portion of movable area. In this case, the image blur suppression with respect to the limit direction is not appropriately performed.

JP 2001 066655 A discloses the features specified in the preamble portion of appended claim 1.

The present invention has been made in view of the above circumstances, and an object of the present invention is to provide an imaging apparatus having a function for suppressing an image blur which can immediately and appropriately perform the image blur suppression when the image blur suppression is required without increasing power consumption.

The present invention provides an imaging apparatus having a function for suppressing an image blur, as specified in the claims.

Accordingly, the imaging apparatus having a function for suppressing an image blur according to the present invention at least has the following advantageous.

According to the present invention, since the image pick-up device is fastened to be retained in the origin position that the optical center of the image pick-up device conforms to the origin, the image pick-up device is not displaced from the origin position when the shaking of camera occurs; thus, the image blur suppression can be immediately and appropriately performed. In addition, the image pick-up device is mechanically fastened to be retained, so the power consumption is not increased.

According to the present invention, the pressing member has contact with the image pick-up device from the side opposite to the imaging plane, so the subject image can be received without being disturbed.

According to the present invention, the image pick-up device is fastened to be retained by fitting the fitting projection into the fitting hole; thus, the image pick-up device is securely fastened to be retained without using a complicated structure.

According to the present invention, since at least one of the fitting hole and the fitting projection has a taper shape, the fitting projection can smoothly fit into the fitting hole.

According to the present invention, since the motor can be used in the operation for fastening the image pick-up device to be retained by way of the origin position forced retention mechanism, it becomes easy to control the fastening and retaining the image pick-up device, and also it is possible to downsize the origin position forced retention mechanism.

According to the present invention, the image pick-up device can be fastened to be retained and can be released by effectively using the space of circumference wall of the fixation casing.

**[0018]** - According to the present invention, the rotation direction of the rotation transferring gear is constant, so the rotation of the rotation transferring gear can be controlled with high accuracy without considering the error by the backlash.

According to the present invention, with the reset process, the cam pin has contact with the contact wall regardless of the position of cam pin before operating the suppression function by rotating the rotation transferring gear in the reverse rotation direction one time, and the rotation transferring gear rotates in the normal rotation direction till the cam pin reaches the incline start position from the contact position. Therefore, the relative positional relationship between the cam pin and the cam groove after the reset process becomes constant.

FIG.1 is a font view of a digital camera according to the present invention.

FIG.2 is a back view of the digital camera according to the present invention.

FIG.3 is a top view of the digital camera according to the present invention.

FIG.4 is block circuit diagram illustrating a schematic system structure of an interior of the digital camera according to the present invention.

FIG.5 is a flow chart explaining general operation of the digital camera according to the present invention.

FIG.6A is a view explaining a principle for correcting camera shake of the digital camera according to the present invention, presenting the inclination of digital camera.

FIG.6B is a partly enlarged view presenting relationship between a photographing lens and an imaging surface of a CCD of the digital camera.

FIG.7 is a front view illustrating a fixation casing of lens barrel of the digital camera according to the present invention.

FIG.8 is a longitudinal section view of the fixation casing presented in FIG.7.

FIG.9A is a back view of the fixation casing illustrated in FIG.7, presenting a stage that a flexible printed board is not attached.

FIG.9B is a back view of the fixation casing illustrated in FIG.7, presenting a state that the flexible printed board is attached.

FIG.10 depicts an explored perspective view of a CCD stage according to the present invention.

FIG.11 depicts a partly enlarged sectional view along the II-II line in FIG. 9B.

FIG.12A is an explanation view illustrating a major portion of origin position forced retention mechanism according to the present invention, and is a perspective view illustrating connection relationship among the CCD stage, a stepping motor and a conversion mechanism.

FIG.12B is a perspective view illustrating a partly enlarged conversion mechanism.

FIG.13A is a pattern diagram of a cam groove of a rotation transferring gear, presenting a bottom plane view of the rotation transferring gear.

FIG.13B is a view illustrating a cross section obtained along the circulated one-point dotted line V presented in FIG.13A.

FIG.13C illustrates a state that the cam pin slides the inclined surface portion of cam groove, and the rotation transferring gear is pushed up toward the base member.

FIG.13D illustrates a state that the cam pin has contact with the flat top portion of cam groove, and the transferring gear is pushed up at maximum.

FIG.13E illustrates a state that the cam pin passes through a steep cliff to have contact with a flat valley floor portion, and the transferring gear is pushed up at maximum.

FIG.14A is an explanation view for explaining a state that the retainer pin presented in FIG.12A is fitted to the concave portion, illustrating a partly enlarged cross section view presenting a state that the retainer pin is closely fitted to the circumference wall of concave portion.

FIG.14B illustrates a partly enlarged cross section view presenting a state that the retainer pin is separated from the circumference wall of concave portion.

FIG.15 is an upper side view presenting the flexible printed board before being bent.

FIG.16 is a view illustrating a state that the flexible printed board before being bent is attached to the CCD stage.

FIG.17 is a view illustrating a state that a connection extension portion of the printed board is overlapped.

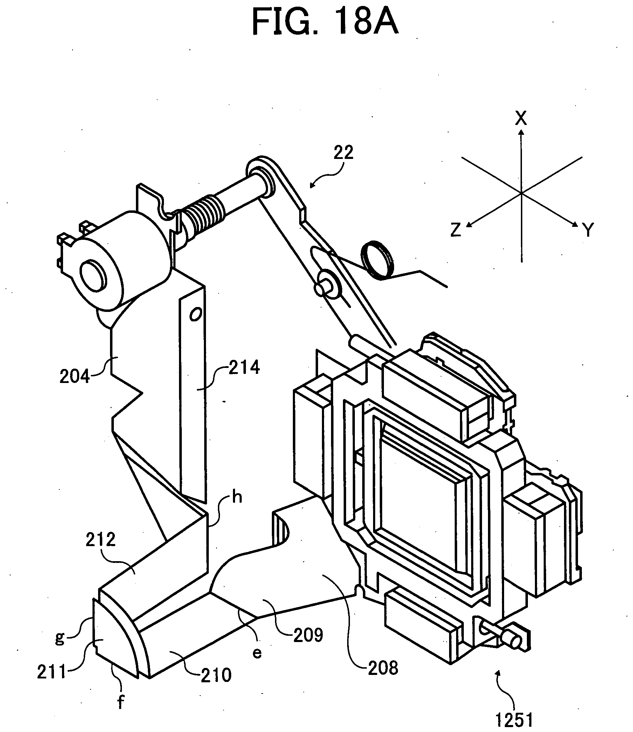

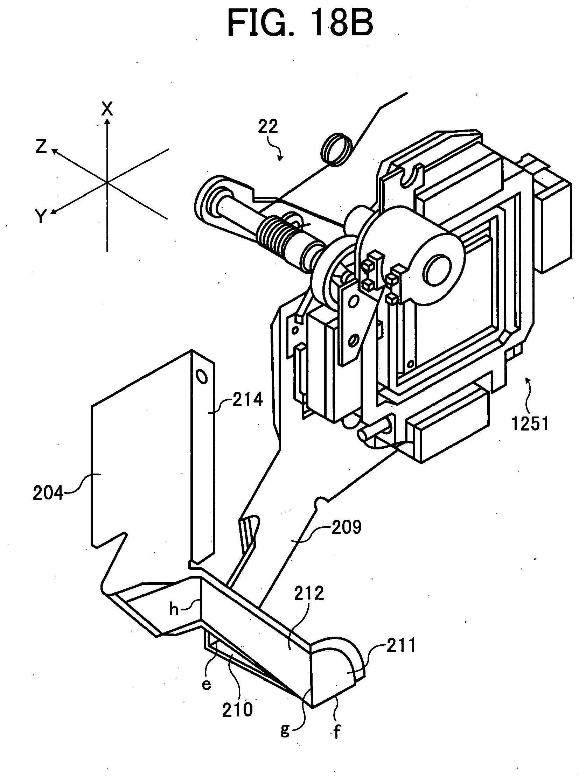

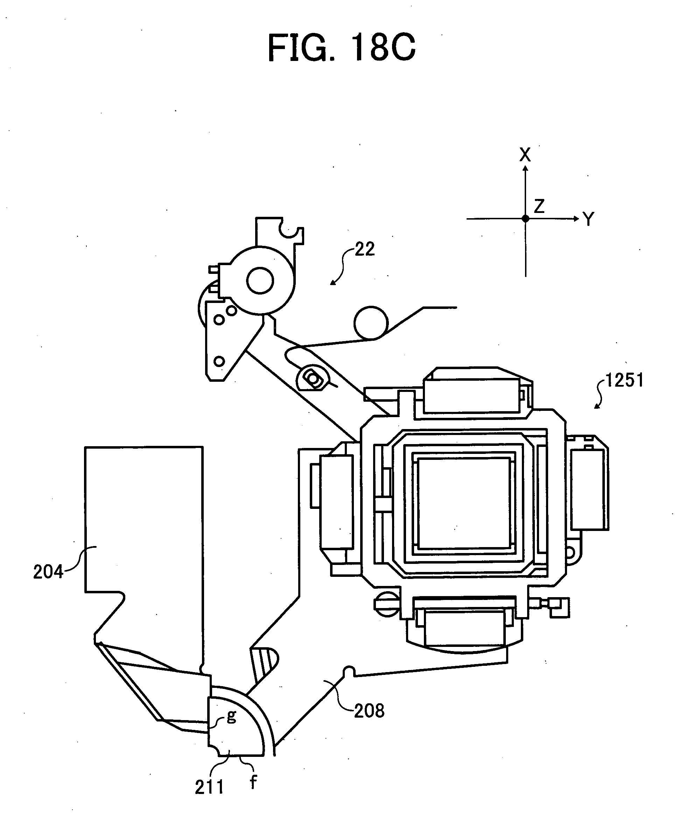

FIGs.18A-18C are perspective views presenting location relationship between the CCD stage and the flexible printed board, each of them are seen from a different direction.

FIG.19 depicts a block circuit diagram of an origin position forced retention control circuit according to the present invention.

FIG. 20 a flow chart illustrating one example of a control process of an origin position forced retention mechanism of a mechanism for suppressing an image blur according to the present invention.

FIG. 21 depicts a circuit diagram presenting one example of a camera shake detection circuit according to the present invention.

FIG. 22 depicts a block circuit diagram of a control circuit for suppressing an image blur according to the present invention.

FIG. 23 is a flow chart presenting one example of a variation correction setting process according to the present invention.

FIG. 24 is a flow chart presenting one example of a process of a control circuit for suppressing an image blur according to the present invention.

FIG. 25 is a block circuit diagram illustrating a modification example of a feedback circuit present in FIG. 22.

FIG. 26 is a flow chart illustrating a flow of process for suppressing an image blur of an imaging apparatus according to the present invention.

FIG. 27 is a timing chart illustrating one example of the suppression process in case of the full-pressing of the imaging apparatus according to the present invention.

FIG. 28 is a timing chart presenting one example of the release process of process for suppressing an image blur of the imaging apparatus according to the present invention.

FIG. 29 is a timing chart presenting one example of the suppression process in case of the full-pressing at one shot of the imaging apparatus according to the present invention.

Hereinafter, a camera having a function for suppressing an image blur according to the present invention will be explained with reference to the drawings.

[Embodiment]

(General Structure of Digital Camera)

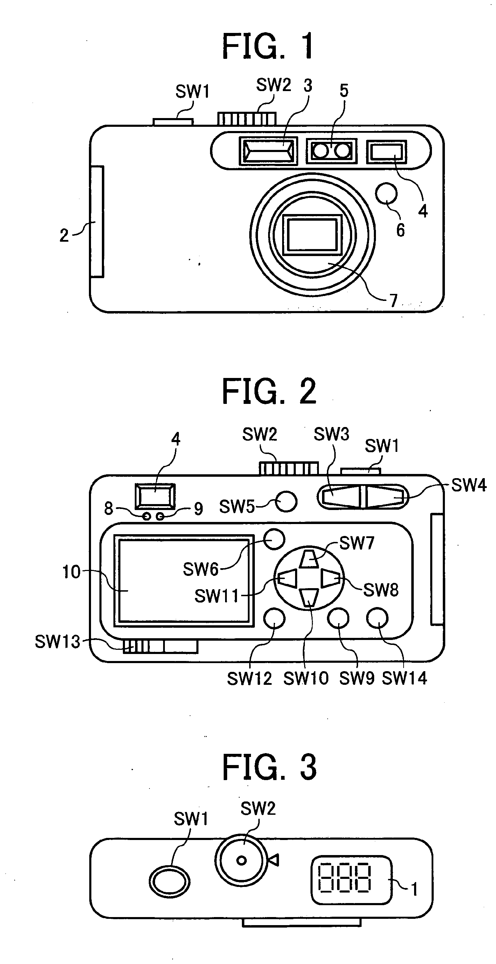

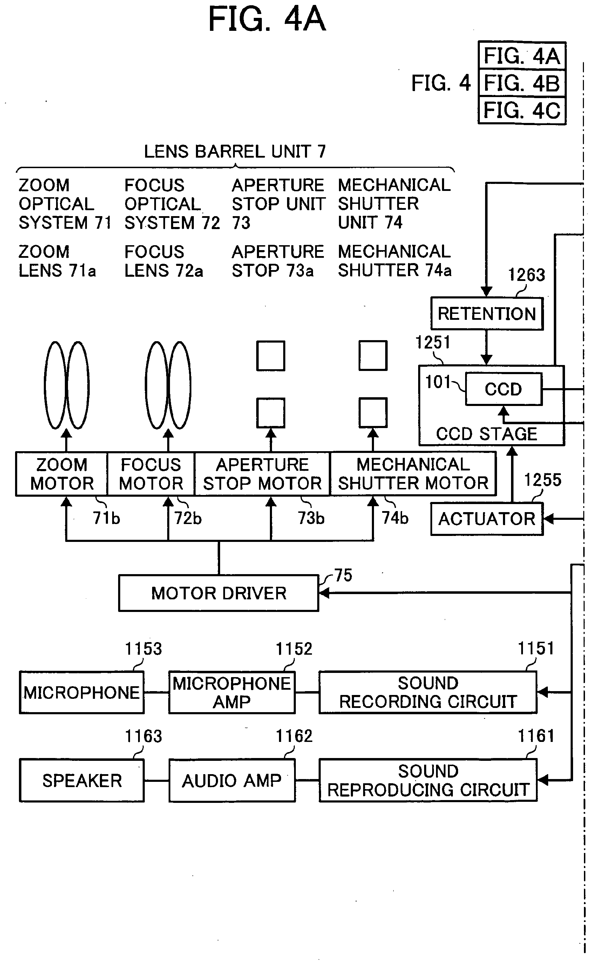

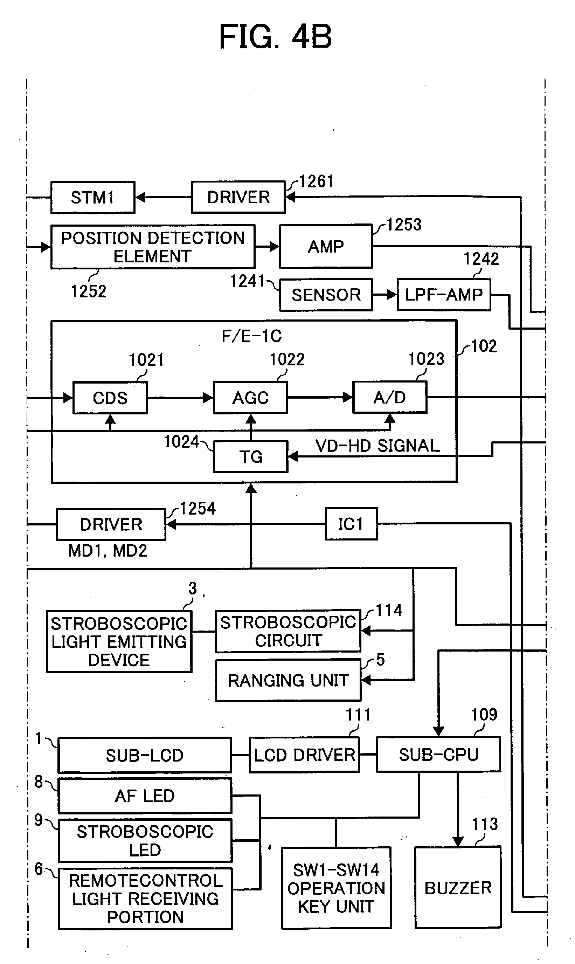

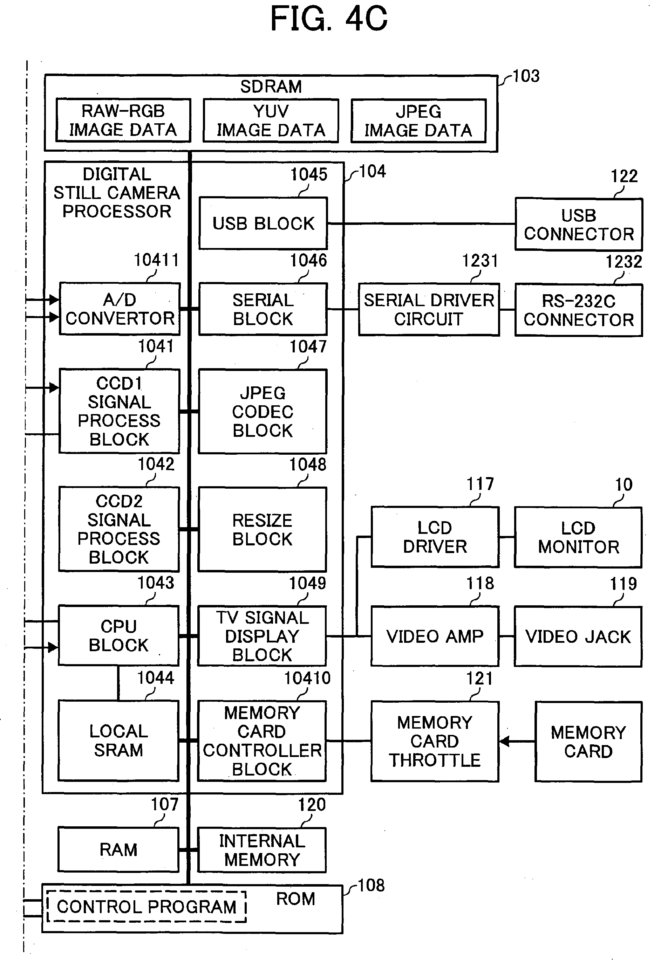

FIG.1 is a front view illustrating a digital still camera (hereinafter, referred to as a camera) as an imaging apparatus according to the present invention, FIG.2 is a back view thereof, FIG.3 is a top view thereof, and FIG.4 is a block circuit diagram illustrating a schematic system structure of the digital camera interior.

Referring to FIG.1, a camera body has a top plane provided with a release switch (release shutter) SW1, a mode dial SW2, and a sub liquid crystal display (or sub LCD) 1 presented in FIG.3.

The camera body has a front plane provided with a lens barrel unit 7 including a photographing lens, an optical finder 4, a stroboscopic light emitting section 3, a ranging unit 5, and a remote control light receiving section 6.

The camera has a back plane, as illustrated in FIG.2, provided with a power switch SW13, an LCD monitor 10, an AFLED8, a stroboscopic LED 9, the optical finder 4, a wide angle direction zoom switch SW3, a telephoto direction zoom switch SW4, a self timer setting/releasing switch SW5, a menu switch SW6, an upward movement/stroboscopic setting switch, a right movement switch SW8, a display switch SW9, a downward movement/micro-switch SW10, a left movement/image confirmation switch SW11, an OK switch SW12, and a switch for suppressing an image blur SW14. The camera body has a side plane provided with a lid 2 of memory card/battery loading room.

The function and operation of each of these members is well known; thus, the explanation thereof is omitted. Next, the system structure of camera interior will be explained.

Referring to FIG.4, reference number 104 denotes a digital still camera processor (hereinafter, referred to as a processor).

The processor 104 comprises an A/D converter 10411, a CCD1 signal processing block 1041, a CCD2 signal processing block 1042, a CPU block 1043, a local SRAM 1044, an USB block 1045, a serial block 1046, a JPEG/CODEC block (JEPG compression/decompression block) 1047, a RESIZE block (block which expands and reduces size of image data by an interpolating process) 1048, a TV signal display block (block which converts image data to a video signal for displaying on an external display device such as a liquid crystal monitor or TV) 1049, and a memory card controller block (block which conducts control of a memory card for recording photographing image data) 10410. Each of the blocks is connected each other via a bus line.

Disposed in the outside of the processor 104 is a SDRAM 103 for storing RAW-RGB image data (image data that white balance setting and $\gamma$ setting are performed), YUV image data (image data that luminance data and color difference data conversion are performed), and JPEG image data (image data that JPEG compression is performed), which is connected to the processor 104 via a memory controller (not shown) and a bus line.

In addition, disposed in the outside of the processor 104 is a RAM 107, an internal memory 120 (a memory which stores photographing image data when a memory card is not installed in a memory card throttle), and a ROM 108 having a control program, parameter, etc., stored therein, which are connected to the processor 104 via a bus line.

The control program stored in the ROM 108 is loaded in the main memory (not shown) of the processor 104 when turning on the power switch SW13 of camera. The processor 104 controls the operation of each section according to the control program and also temporary stores the control data, parameters, etc., in the RAM 107 or the like.

The lens barrel unit 7 comprises a lens barrel including a zoom optical system 71 having a zoom lens 71a, a focus optical system 72 having a focus lens 72a, an aperture stop unit 73 having an aperture stop 73a, and a mechanical shutter unit 74 having a mechanical shutter 74a.

The zoom optical system 71, focus optical system 72, aperture stop unit 73, and mechanical shutter unit 74 are driven by a zoom motor 71b, a focus motor 72b, an aperture stop motor 73b, and a mechanical shutter motor 74b, respectively.

Each of these motors is driven by a motor driver 75, and the motor driver 75 is controlled by the CPU block 1043 of the processor 104.

A subject image is imaged onto the CCD 101 by each of the lens systems of lens barrel unit 7, and the CCD 101 converts the subject image into an image signal to output the image signal to an F/E-IC 102. The F/E-IC 102 comprises a CDS 1021 which performs correlated double sampling for eliminating image noise, an AGC 1022 for gain adjustment, and an A/D converter 1023 which conducts analog/digital conversion. More particularly, F/E-IC 102 conducts a predetermined process to the image signal to convert the analog image signal to the digital signal, and output the digital signal to the CCD1 signal processing block 1041 of the processor 104.

These signal control processes are performed via a TG 1024 by a vertical synchronization signal VD and a horizontal synchronization signal HD output from the CCD1 signal processing block 1041 of processor 104. The TG 1024 generates a driving timing signal based on the vertical synchronization signal VD and horizontal synchronization signal HD.

The CPU block 1043 of processor 104 is configured to control voice recording operation by a voice recording circuit 1151. The voice recording circuit 1151 records a signal amplified by a microphone amplifier 1152 of a voice recording signal converted by a microphone 1153 according to a command. The CPU block 1043 controls operation of a sound reproducing circuit 1161. The sound reproducing circuit 1161 reproduces a sound signal appropriately stored in a memory by a command and outputs the sound signal to an audio amplifier 1162 so as to output the sound from a speaker 1163.

The CPU block 1043 controls a stroboscopic circuit 114 so as to flash illumination light from the stroboscopic light emitting section 3. The CPU block 1043 also controls the ranging unit 5.

The CPU block 1043 is connected to a sub CPU 109 of the processor 104. The sub CPU 109 controls the display by the sub LCD 1 via an LCD driver 111. The sub CPU 109 is also connected to the AFLED8, stroboscopic LED 9, remote control light receiving section 6, operation key unit having the operation switches SW1-SW14 and a buzzer 113.

The USB block 1045 is connected to a USB connector 122. The serial block 1046 is connected to an RS-232C connector 1232 via a serial driving circuit 1231. The TV signal display block 1049 is connected to the LCD monitor 10 through an LCD driver 117, and also connected to a video jack (jack which connects the camera to an external display device such as TV) 119 via a video amplifier (amplifier which converts a video signal output from the TV signal display block 1049 into 75Ω impedance) 118. The memory card controller block 10410 is connected to the contact point with the card contact point of a memory card throttle 121.

The LCD driver 117 drives the LCD monitor 10 and also converts the video signal output from the TV signal display block 1049 into a signal for displaying onto the LCD monitor 10. The LCD monitor 10 is used for monitoring a subject condition before photographing, confirming a photographed image and displaying image data recorded in a memory card or an internal memory.

The digital camera has the body provided with a fixation casing (described later) comprising a part of the lens barrel unit 7. The fixation casing is provided with a CCD stage 1251 capable of moving in the X-Y direction. The CCD 101 is installed in the CCD stage 1251 comprising a part of suppression mechanism. The details of mechanical structure of the CCD stage 1251 will be described later.

The CCD stage 1251 is driven by an actuator 1255, and the driving of actuator 1255 is controlled by a driver 1254. The driver 1254 comprises a coil drive MD1 and a coil drive MD2. The driver 1254 is connected to an analog/digital converter IC1 which is connected to the ROM 108. The control data is input to the analogue/digital converter IC1 from the ROM 108.

The fixation casing is provided with an origin position forced retention mechanism 1263 which retains the CCD stage 1251 to the central position when the suppression switch SW14 is powered off or the power switch SW13 is powered off. The origin position forced retention mechanism 1263 is controlled by a stepping motor STM1 as an actuator which is driven by a driver 1261. The control data is input to the driver 1261 from the ROM 108.

The CCD stage 1251 is provided with a position detection element 1252. The detection output of position detection element 1252 is input to an amplifier 1253 to be amplified, and the amplified detection output is input to the A/D converter 10411. The camera body is provided with a gyro sensor 1241, which can detect the rotation of camera in the X-direction (pitch direction) and Y-direction (yaw direction). The detection output of gyro sensor 1241 is input to the A/D converter 10411 via an amplifier 1242 which is also used as a low pass filter.

Next, a general operation of a camera according to the present invention will be schematically explained.

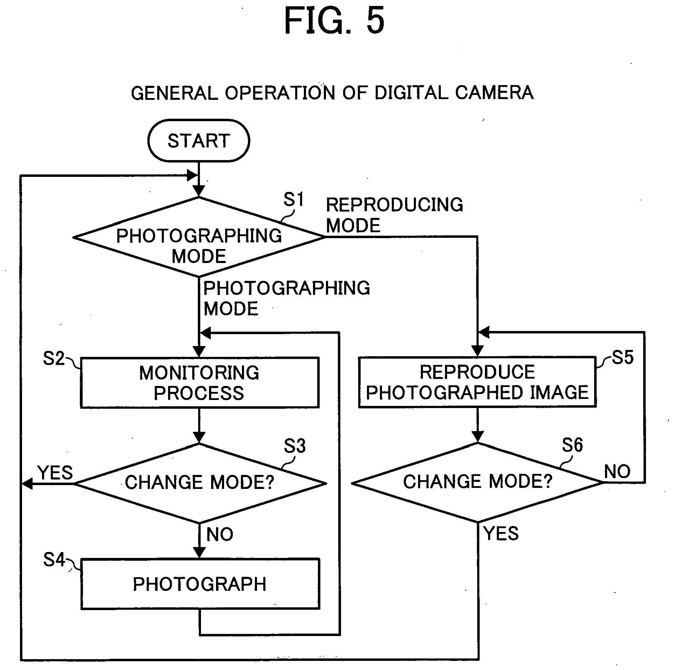

If the mode dial SW2 is set to a photographing mode, the camera is activated with the photographing mode. Also, if the mode dial SW2 is set to a reproducing mode, the camera is activated with the reproducing mode. The processor 104 determines whether the switch condition of the mode dial SW2 is the photographing mode or the reproducing mode (S1, FIG.5).

The processor 104 controls the motor driver 75 to move the lens barrel of the lens barrel unit 7 to a photographable position. Moreover, the processor 104 powers on each of the circuits of the CCD 101, F/E-IC 102, LCD monitor 10, and the like to start the operation. If each of the circuits is powered on, the operation of finder mode is initiated.

In the finder mode, the light entered into the image pick-up device (CCD 101) through each of the lens systems is photo-electrically converted to be sent to the CDS circuit 1021 and the A/D converter 1023 as analogue signals of R, G, B. The A/D converter 1023 converts the analogue signals into the digital signal. The digital signals are converted into the YUV image data by a YUV converter in the digital signal processing IC (SDRAM 103), and written into a flame memory by a memory controller (not shown).

The YUB signal is read by the memory controller, and is sent to a TV (not shown) or the LCD monitor 10 via the TV signal display block 1049; thereby, the photographing image is displayed. This process is performed at intervals of 1/30 seconds; thus, the display of photographing image in the finder mode will be renewed at every 1/30 seconds. Namely, a monitoring process is carried out (S2, FIG.5). Next, the processor 104 determines whether or not the setting of mode dial SW2 has been changed (S3, FIG.5). If the setting of mode dial SW2 remains in the photographing mode, the photographing process is carried out according to the operation of release switch SW1 (S4, FIG.5).

In the reproducing mode, the processor 104 displays the photographed image onto the LCD monitor 10 (S5, FIG.5). Next, the processor 104 determines whether or not the setting of mode dial SW2 has been changed (S6, FIG.5). If the setting of mode dial SW2 has been changed, the flow moves to S.1. If the setting of mode dial SW2 has been unchanged, the process of S.5 is repeated.

(Principle of Image blur suppression)

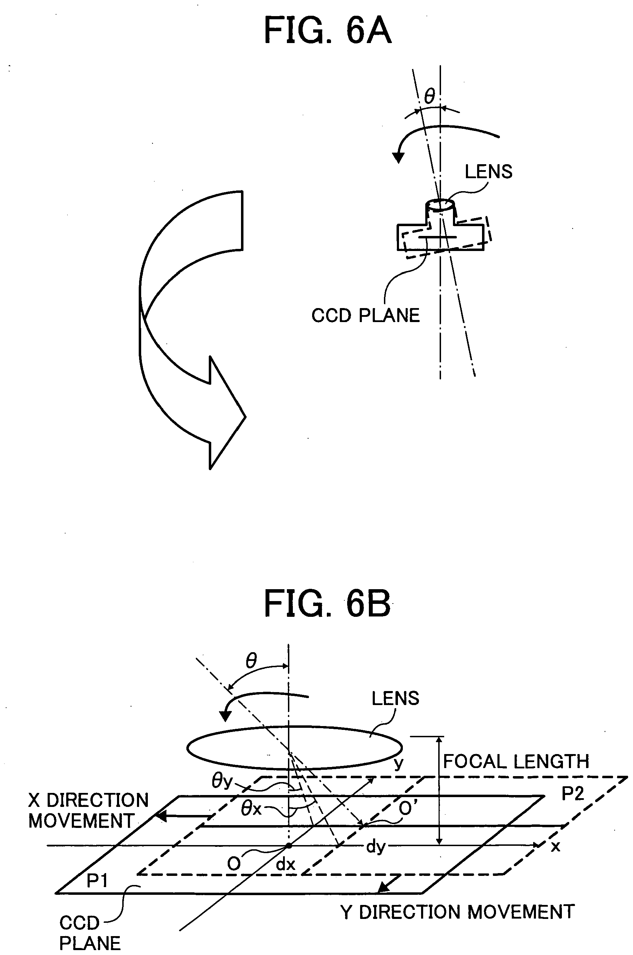

FIGs.6A, 6B illustrate views for explaining a principle of image blur suppression. FIG.6A presents the state of digital camera as illustrated by the dotted line inclined with respect to the state of digital camera free from the camera shake as illustrated by the solid line. FIG.6B is a partly enlarged view illustrating relationship between the photographing lens of camera body and the imaging plane of CCD 101.

In a state that the camera is not moved by the camera shake, if the imaging plane of CCD 101 is in a position P1, i.e., in the central position, the image of subject is projected onto the origin O. Here, if the camera is inclined in the $\theta$ direction ($\theta$x, $\theta$y) by the camera shake, the imaging plane shifts to the position P2 of imaging plane and the image of subject shifts to O'. In this case, the imaging plane is moved in parallel at dx in the X-direction and dy in the Y-direction, such that the position of imaging plane becomes P1. The image of subject, thereby, returns to the original origin position O.

(Mechanical Structure of Suppression Function)

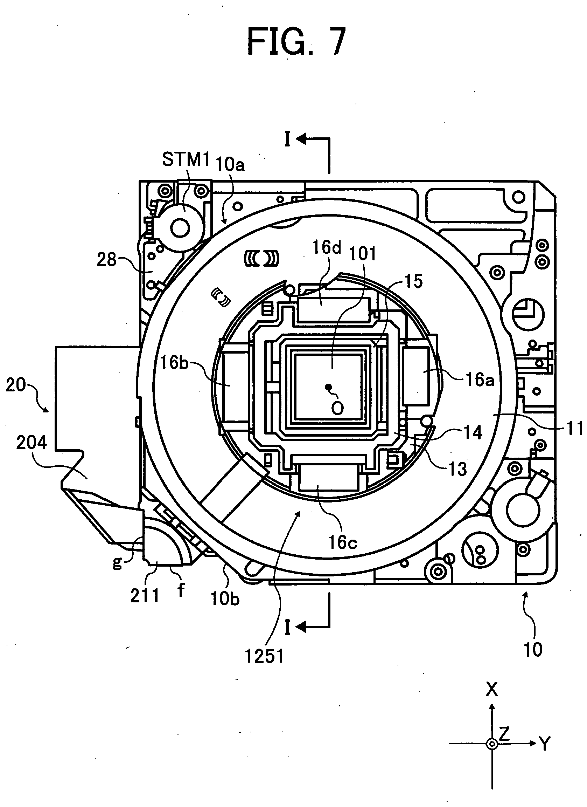

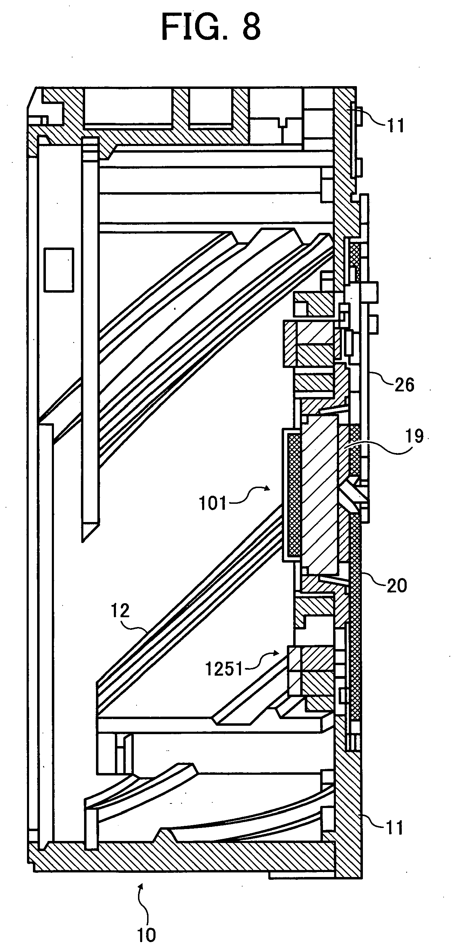

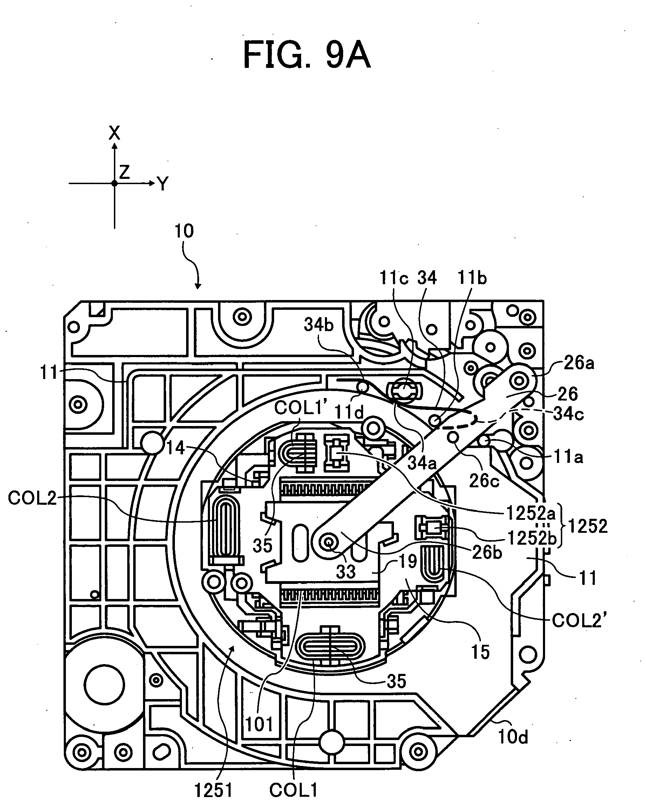

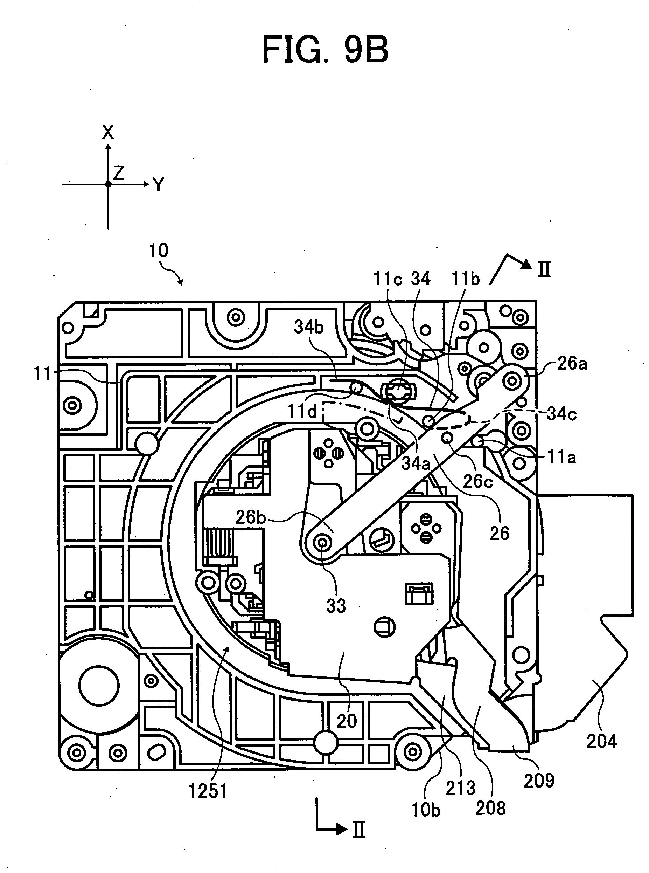

FIG.7 depicts the front view of fixation casing, FIG.8 depicts the longitudinal sectional view of fixation casing, and FIG.9 depicts the back view of fixation casing. Referring to FIGs.7-9, reference number 10 denotes the fixation casing. The fixation casing preferably comprises a boxing shape, and the inside thereof is used as a storage space for receiving the lens barrel. The fixation casing 10 has a back plane provided with a plate-like base member 11 preferably comprising a substantially rectangular shape in its entirety. The fixation casing 10 has an inner circumference wall formed with a helicoid for extending and collapsing the lens barrel. The fixation casing 10 includes at least two notched corner portions. One of the corner portions 10a is used as an installation portion of an after mentioned stepping motor STM, and the other corner portion 10a is used as a bending portion of an after mentioned flexible printed board 20.

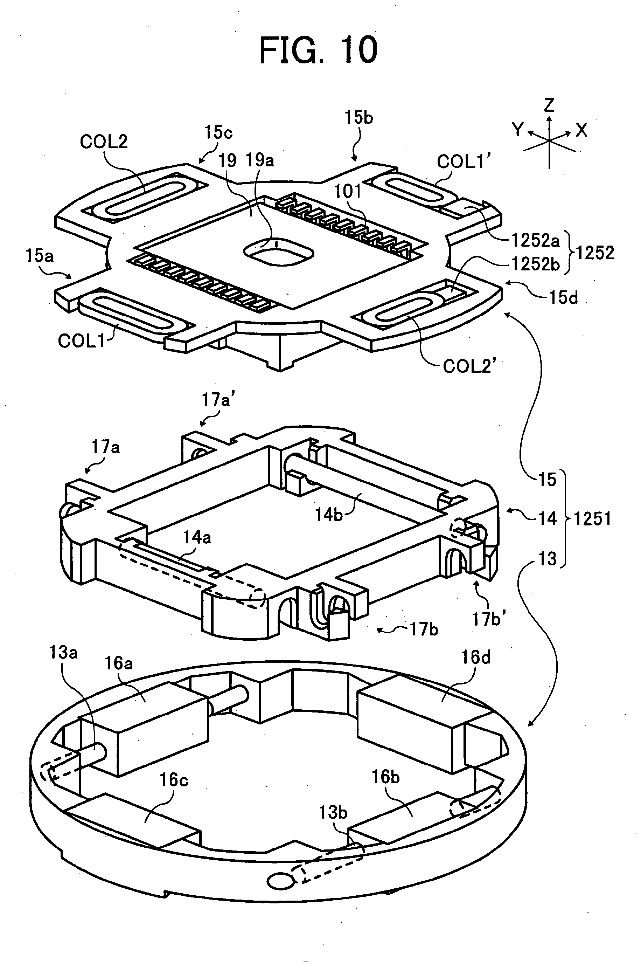

The CCD stage 1251 is provided in the base member 11. The CCD stage 1251 comprises an X-direction stage 13 preferably having a circular frame shape, a Y-direction stage 14 preferably having a rectangular shape and a mounting stage 15, as separately illustrated in FIG.10.

The X-direction stage 13 is fastened to the base member 11. The X-direction stage 13 is provided with a pair of guide shafts 13a, 13b extending in the X-direction at intervals in the Y-direction. The X-direction stage 13 is provided with two pairs of permanent magnets 16a-16d, preferably each having a rectangular shape. One pair of permanents magnets 16a, 16b is disposed in parallel at intervals in the Y-direction within the X-Y plane. In this embodiment, the pair of guide shafts 13a, 13b penetrates .the pair of permanent magnets 16a, 16b, respectably, but the pair of permanent magnets 16a, 16b and the pair of guide shafts 13a, 13b may be installed in combination. One pair of permanent magnets 16c, 16d is disposed in parallel at intervals in the X-direction within the X-Y plane.

The Y-direction stage 14 is provided with a pair of guide shafts 14a, 14b extending in the Y-direction at intervals in the X-direction. The Y-direction stage 14 is also provided with a pair of supported portions 17a, 17a', which faces each other at intervals in the X-direction, and a pair of supported portions 17b, 17b', which faces each other at intervals in the X-direction. The two pairs of supported portions 17a, 17a', 17b, 17b' are disposed at intervals in the Y-direction. The pair of supported portions 17a, 17a' is movably supported in the guide shaft 13a of the X-direction stage 13, and the pair of supported portion 17b, 17b' is movably supported in the guide shaft 13b of the X-direction stage 13. The Y-direction stage 14 can be, thereby, moved in the X-direction.

The CCD 101 is fastened onto the mounting stage 15. The mounting stage 15 comprises a pair of coil attachment plate portions 15a, 15b overhanging in the X-direction and a pair of coil attachment plate portions 15c, 15d overhanging in the Y-direction. The CCD 101 is roughly fastened to the center of mounting stage 15. The mounting stage 15 is provided with a pair of supported portions (not shown), which faces each other at intervals in the Y-direction, and a pair of supported potion (not shown), which faces each other at intervals in the Y-direction. The -two pairs of supported portions are disposed at intervals in the X-direction in the same side as the imaging plane of CCD 101. One pair of supported portions is movably supported in the guide shaft 14a of the Y-direction stage 14, and the other pair of supported portions is movably supported in the guide shaft 14b of the Y-direction stage 14. The mounting stage 15 can be, thereby, moved in the X-Y direction in its entirety.

Attached to the plane opposite to the imaging surface of the CCD 101 is a protection plate 19 preferably having a taper shaped concave portion 19a formed in the central portion thereof. The function of the concave portion 19a will be described later.

The coil attachment plate portions 15a, 15b are provided with flat and scroll-like coil bodies COL1, COL1', respectively, which are serially connected. The coil attachment plate portions 15c, 15d are provided with flat and scroll-like coil bodies COL2, COL2', respectively, which are serially connected.

Each of the coil bodies COL1, COL1' is disposed to face each of the permanent magnets 16c, 16d. Each of the coil bodies COL2, COL2' is also disposed to face each of the permanent magnets 16a, 16b. The pair of coil bodies COL1, COL1' is used to move the CCD 101 in the X-direction (for example, pitch direction), and a pair of coil bodies COL2, COL2' is used to move the CCD 101 in the Y-direction (for example, yaw direction).

Each of the coil bodies COL1, COL1' is provided with an adsorption bar 35 comprising a magnetic material in the direction so as to intersect each of the coil bodies COL1, COL1' in the X-direction, as presented in FIG.9A.

In this case, a hall element may be used as the position detection element 1252. One of the coil attachment plate portions 15a, 15b, for example, the coil attachment plate portion 15b is provided with a hall element 1252a as the position detection element 1252. Similarly, one of the coil attachment plate portions 15c, 15d, for example, the coil attachment plate portion 15d is provided with a hall element 1252b.

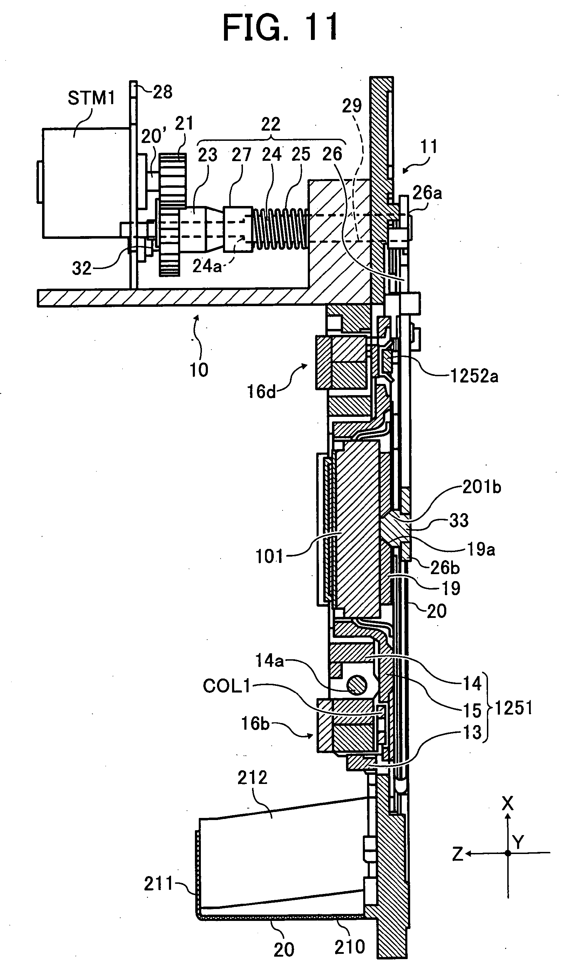

The CCD 101 is electrically connected to the F/EIC 102 via the flexible printed board 20 (reference to FIG. 11). The hall elements 1252a, 1252b are electrically connected to the operational amplifier 1253 via the flexible printed board 20, and each of the coil bodies COL1, COL1', COL2, COL2' is electrically connected to the coil driver 1254.

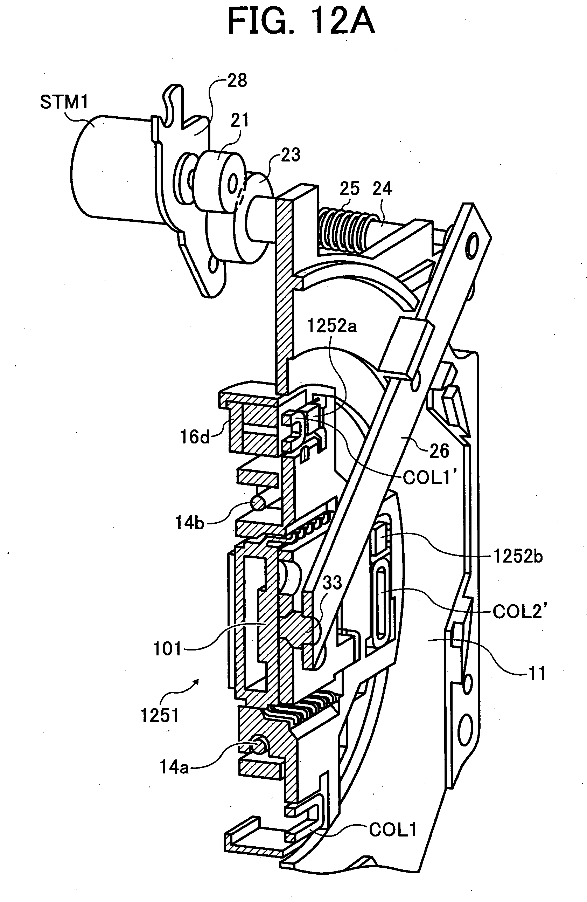

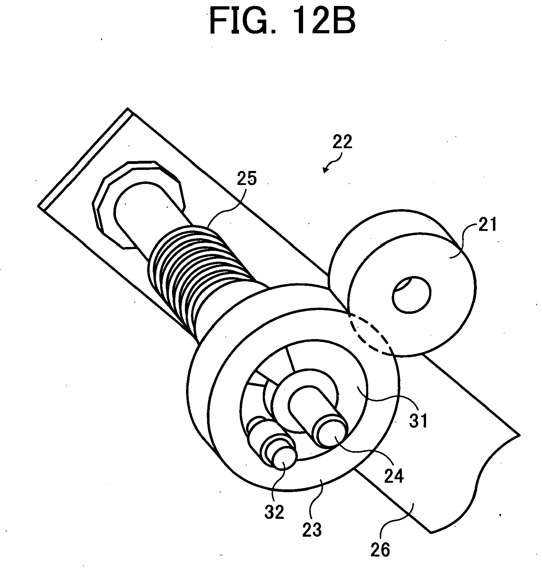

As illustrated in the enlarged views of FIGs.11, 12, the origin position forced retention mechanism 1263 comprises the stepping motor STM1. At first, the mechanical structure of the origin position forced retention mechanism 1263 will be described in details, and the driving and controlling of the stepping motor STM1 will be described later.

As illustrated in FIGs.7, 11, the stepping motor STM1 is provided in the corner portion 10a of the fixation casing 10. The stepping motor STM1 has an output shaft 20' provided with an output gear 21. The corner portion 10a of the fixation casing 10 is provided with a conversion mechanism 22 which converts rotational movements to linear movements.

The conversion mechanism 22 comprises a rotation transferring gear 23, a reciprocating shaft 24, a coil biasing spring 25, a forced retainer plate 26, and a spring supporting member 27. The corner portion 10a of the fixation casing 10 is formed with a pair of supporting portions 28, 29 at intervals in the Z-axis direction. The supporting portion 28 comprises a motor attachment plate. The reciprocating shaft 24 is supported between the supporting portion 29 and the motor attachment plate 28. The rotation transferring gear 23 locates between the pair of supporting portions 28, 29 to be rotatably supported in the reciprocating shaft 24 and engaged with the output gear 21.

The reciprocating shaft 24 has a portion of one end side which penetrates the supporting portion 29 to face the back plane side of the base member 11. The coil biasing spring 25 is provided between the spring supporting portion 27 and the supporting portion 29. The reciprocating shaft 24 is biased toward the supporting portion 28 by the coil biasing spring 25. The reciprocating shaft 24 includes a step portion 24a which engages with the shaft hole at the end plane of the rotation transferring gear 23.

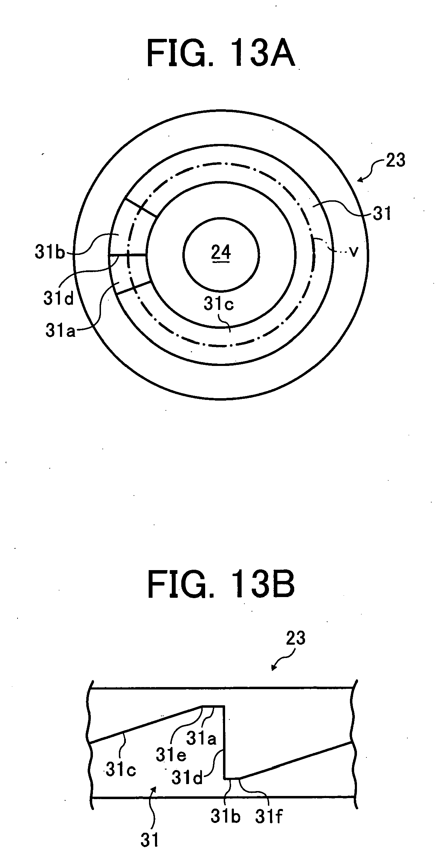

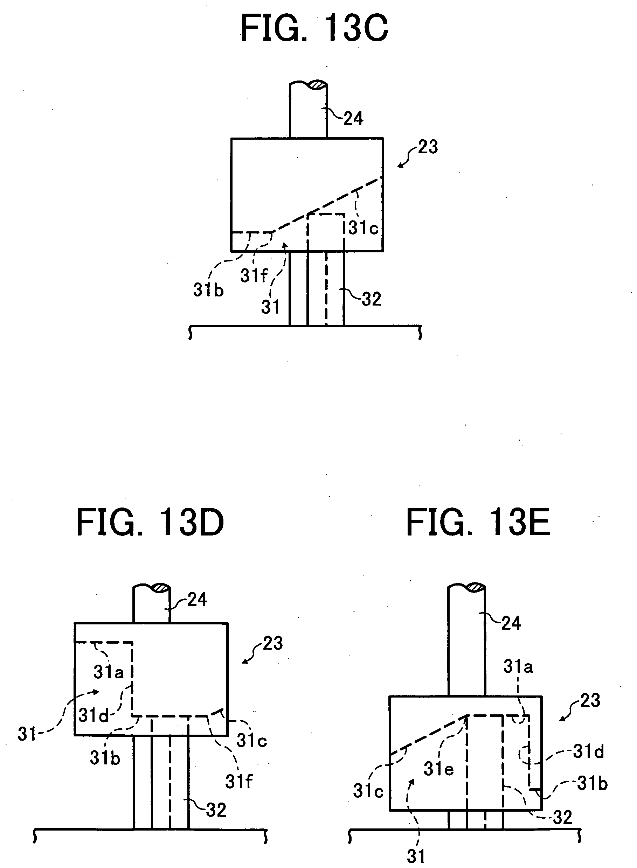

As presented in FIGs.13A-13E, the rotation transferring gear 23 has one of the end plane portions provided with a cam groove 31, which extends in the circumference direction of the rotation transferring gear 23, and comprises a flat valley floor portion 31a, a flat peak portion 31b, and an inclined surface portion 31c inclining continuously from the flat valley floor portion 31a toward the flat peak portion 31b. A steep cliff 31d is formed between the flat valley floor portion 31a and the flat top portion 31b as a contact wall with which an after mentioned cam pin has contact from the rotation direction.

The cam pin 32 is fastened to the supporting portion 28, and has the leading end which slides in contact with the cam groove 31. The length in the rotation direction of the flat valley floor portion 31a from the steep cliff 31d to an incline start position 31e of the inclined surface portion 31c is equivalent to 2 pulses converted to the rotation control signal of the stepping motor STM1.

The length in the rotational direction of the inclined surface portion 31c from the incline start position 31e of the inclined surface portion to an incline end position 31f leading to the flat peak portion 31b is equivalent to 3 pulses converted to the rotation control signal of the stepping motor STM1.

The length in the rotation direction of the peak flat portion 31b between the incline end position 31f and the steep cliff 31d is equivalent to 3 pulses converted to the rotation control signal of the stepping motor STM1. The stepping motor STM1 corresponding to 35 pulses is equivalent to one rotation of the rotation transferring gear 23. The reciprocating shaft 24 completes one reciprocation in the Z-axis direction by one rotation of the rotating transferring gear 23.

The base member 11 has a back plane side provided with the forced retainer plate 26, which roughly extends toward the center of CCD 101 as shown in FIGs.9A, 9B. The forced retainer plate 26 has an end portion 26a fastened to one end portion of the reciprocating shaft 24. The forced retainer plate 26 has a free end portion 26b to which a taper shaped retainer pin 33 is fastened. A guide shaft 26c is formed to project in the middle of the extending direction of the forced retainer plate 26.

The base member 11 is provided with positioning projections 11a, 11b, a coil attachment projection 11c and an engagement projection 11d. The coil attachment projection 11c is provided with a winded portion 34a of a torsion coil spring 34. The torsion coil spring 34 has one end portion 34b engaged with the engagement projection 11d and the other end portion 34c engaged with the guide shaft 26c. The base member 11 is formed with a guide hole (not shown) which guides the guide shaft 26c.

The forced retainer plate 26 has contact with the positioning projection 11a by the torsion coil spring 34 while reciprocating in the direction (Z-direction) leaving or approaching with respect to the base member 11 along the reciprocation of the reciprocating shaft 24. The guide shaft 26c functions to stabilize the reciprocation of the forced retainer plate 26.

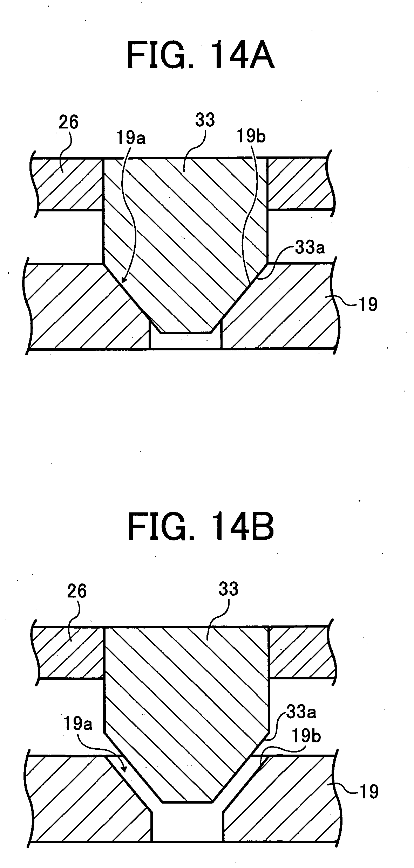

The retainer pin (fitting projection) 33 fits into the concave portion (fitting hole) 19a so as to fulfill the function for mechanically retaining the mounting stage 15 on the origin position. As illustrated in the enlarged view of FIG.14A, a stage that a peripheral wall 33a of the retainer pin 33 is closely fitted to a peripheral wall 19b of the concave portion 19a of the protection plate 19 corresponds to the holding standby position of the cam pin 32. As illustrated in the enlarged view of FIG.14B, a stage that the peripheral wall 33a of the retainer pin 33 is separated from the peripheral wall 19b of the concave portion 19a of the protection plate 19 at the maximum intervals corresponds to the release standby stage of the cam pin 32. The holding standby position of the cam pin 32 is also the forced origin position of the mounting stage 15.

Since the peripheral wall 19b of the concave portion 19a of the protection plate 19 comprises a taper shape, the cam pin 32 can be held in the holding standby position if a gap is developed between the cam pin 32 and the concave portion 19a.

(Folding of Printed Board)

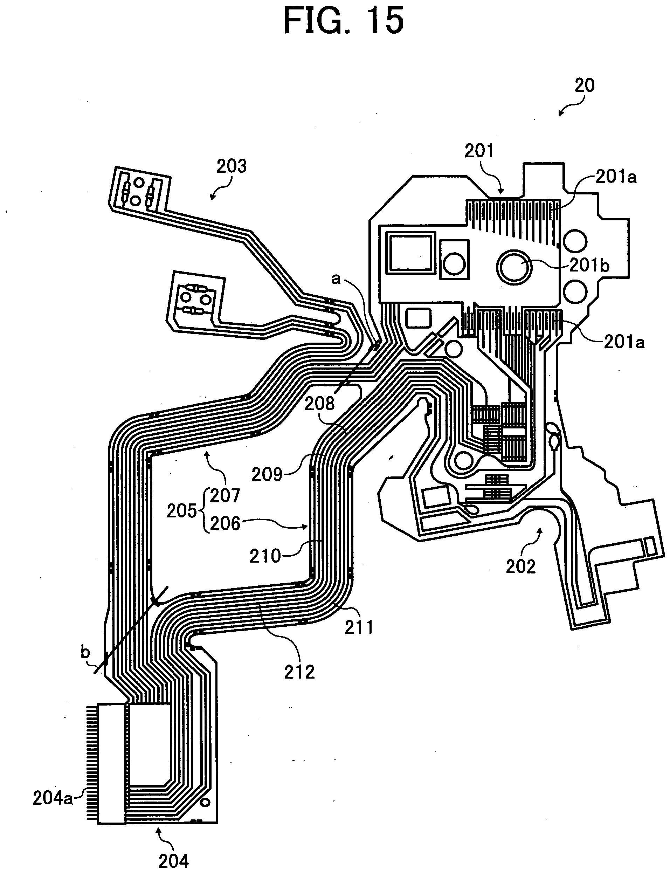

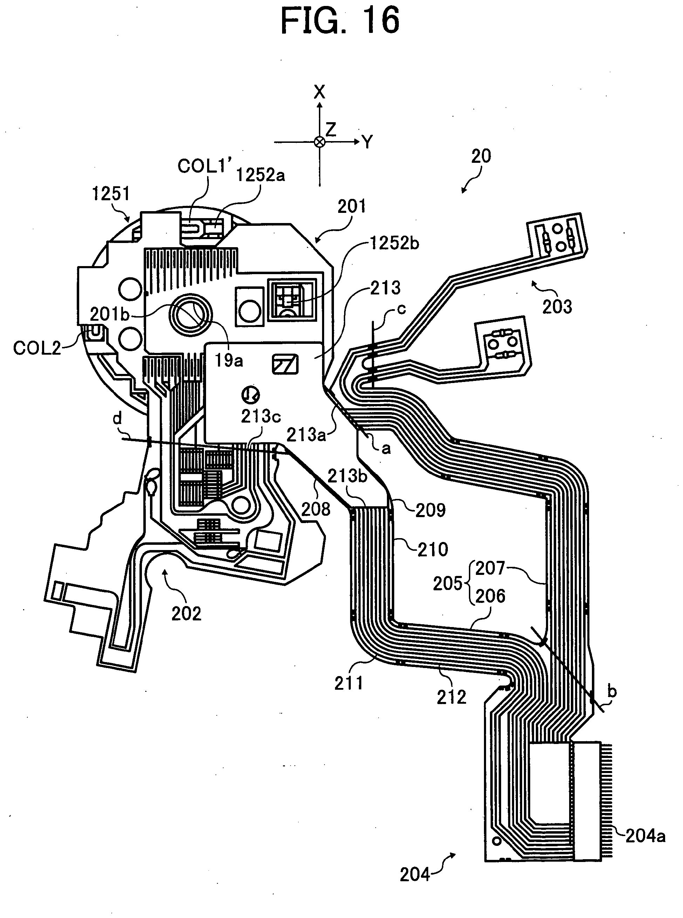

The flexible printed board 20 illustrated in FIG.11 (hereinafter, referred to as a printed board 20) comprises a CCD connection portion 201, a coil connection portion 202, a position detection element connection portion 203, a block circuit connection portion 204 and a connection extension portion 205. FIG.15 is the development view of printed board 20 seen from the upper side of the CCD connection portion 201 and FIG.16 is the development view of printed board 20 seen from the under side of the CCD connection portion 201, illustrating the printed board 20 attached onto the CCD stage 1251.

As presented in FIG.15, the CCD connection portion 201 comprises a connection pattern portion 201a corresponding to a connection pin of the CCD 101 and a through hole 201b corresponding to the concave portion 19a of the protection plate 19. Moreover, the coil connection portion 202 is provided with a connection pattern portion (not shown) which is electrically connectable to each of the coil bodies COL1, COL1', COL2, COL2' (hereinafter, referred to as each of the coil bodies COL). Furthermore, the position detection element connection portion 203 is provided with a connection pattern portion (not shown) which is electrically connectable to the position detection element 1252. The block circuit connection portion 204 comprises a connection pattern portion 204a which is electrically connected to the F/E-IC 102, operational amplifier 1253, and coil driver 1254. The system block circuit is, thereby, electrically connected to the CCD connection portion 201, coil connection portion 202 and position detection element connection portion 203 through the connection extension portion 205.

In the present embodiment, the connection extension portion 205 is configured to branch into a first connection extension portion 206 and a second connection extension portion 207. The second connection extension portion 207 is configured to overlap with the first connection extension portion 206 when folding the connection extension portion 205 along the straight lines a, b. The second connection extension portion 207 has the same structure as that of the first connection extension portion 206 when reversing the upper side and the under side of the second connection extension portion 207; thus, the detailed explanations will be omitted.

The first connection extension portion 206 comprises a first straight line portion 208, a first curved portion 209, a second straight line portion 210, a second curved portion 211 and a third straight line portion 212. The first straight line portion 208 extends from the CCD connection portion 201, which is disposed in the back plane of CCD 101 when being assembled, in the direction (the direction toward the corner portion 10b) inclined at about 45 degrees with respect to the Y-axis direction and X-axis direction (reference to FIG.16). The first curved portion 209 comprises a fan shape as a whole, and its apex angle is about 45 degrees, linking the first straight line portion 208 and the second straight line portion 210 without changing their width dimension. The second straight line portion 210 extends along the X-axis direction. The second curved portion 211 comprises a fan shape as a whole, and its apex angle is about 90 degrees, linking the second straight line portion 210 and the third straight line portion 212 without changing their width dimension. The third straight line portion 212 is configured to have the length the same as that of the second straight line portion 210, and extend along the direction orthogonal to the second straight line portion 210, i.e., the Y-axis direction.

Next, it will be explained about the attachment of printed board 20.

As depicted in FIG. 16, the printed board 20 is attached to the CCD stage 1251 from the protection plate side 19 in a position that the connection pattern portion 201a of CCD connection portion 201 conforms to the connection pin of CCD 101 and the through-hole 201b conforms to the concave portion 19a.

Attached onto the printed board 20 is an FPC auxiliary plate 213 comprising a plate member, and its shape being suitable for a part of the CCD connection portion 201 and the shapes of first straight line portion 208 and first curved portion 209 of the first connection extension portion 206. The FPC auxiliary plate 213 is provided with a first side portion 213a along the straight line a, a second side portion 213b along the border line between the first curved portion 209 and the second straight line portion 210 and a third side portion 213c along an after-mentioned line d, so as to support the folding of the printed board 20.

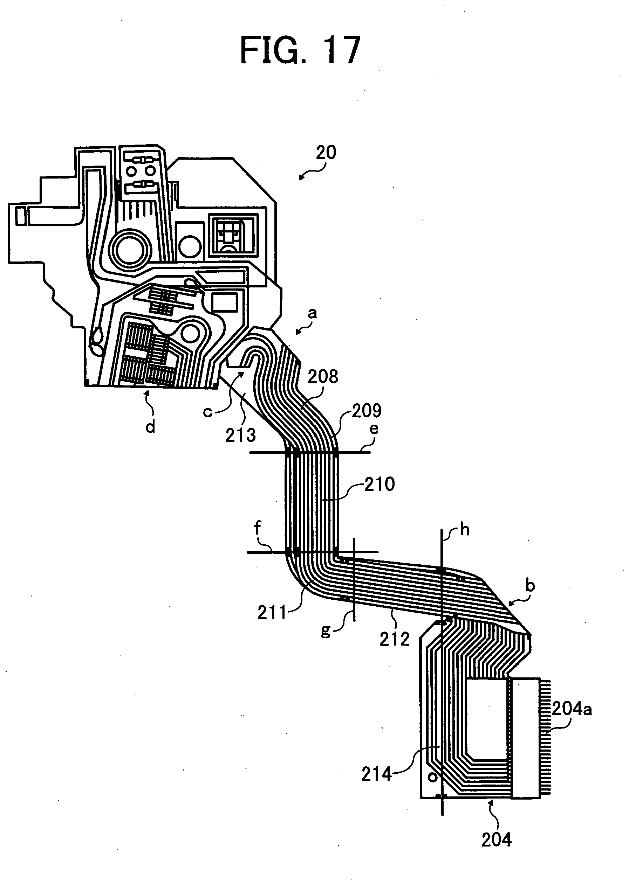

The printed board 20 is folded with the straight lines a, b as the fold lines so that the second connection extension portion 207 overlaps with the first connection extension portion 206 to sandwich the FPC auxiliary plate 213 therebetween (reference to FIG.17).

The printed board 20 is folded with the straight line c as the fold line so that the position detection element connection portion 203 overlaps with the CCD connection portion 201 to electrically connect the position detection element connection portion 203 to the position detection element 1252 (reference to FIG.17).

The printed board 20 is folded with the straight line d as the fold line so that the coil connection portion 202 overlaps with the CCD connection portion 201 to electrically connect the coil connection portion 202 to each of the coil bodies COL (reference to FIG.17). According to the above described steps, the printed board 20 is attached to the CCD stage 1251 to locate within the X-Y plane on the base member 11 as illustrated in FIG.17.

Next, as illustrated in FIGa.9B, 11, 18A, 18B, the printed board 20 is roughly folded at a right angle along the straight line e so that the second straight line portion 210 extends along the Y-Z plane at the corner portion 10b of the fixation casing 10.

Moreover, the printed board 20 is roughly folded at a right angle along the straight line f so that the second curved portion 211 extends within the X-Y plane displaced from the base member 11 to the lens barrel side of the Z-axis direction and also extends toward the side of fixation casing 10.

Next, the printed board 20 is roughly folded at a right angle along the straight line g so that the third straight line portion 212 extends along the X-Z plane at the corner portion 10b of the fixation casing 10.

The printed board 20 is roughly folded at a right angle along the straight line h so that the block circuit connection portion 204 extends along the X-Y plane in the outside of the fixation casing 10. The block circuit connection portion 204 is attached to the base member 11 through a folding portion 214, which is formed by the folding along the straight line h and extends along the X-Z plane (reference to FIGs.7, 9B).

When performing the image blur suppression, the mounting stage 15 moves within the X-Y plane on the base member 11, so the relative distance between the mounting stage connection side fastened to the mounting stage 15 and the block circuit connection side 204 fastened to the base member 11 is changed in the printed board 20. In order to prevent the force resulted from the change in the relative distance therebetween, which disturbs the movement of mounting stage 15, the printed board 20 has the second straight line portion 210 existing within the Y-Z plane and the third straight line portion 212 existing within the X-Y plane, which are located orthogonal to each other. Since the printed board 20 easily deforms in its thickness direction, the force in the X-axis direction is absorbed by the bending deformation of the second straight line portion 210, and also the force in the Y-axis direction is absorbed by the bending deformation of the third straight line portion 212, as a result, the force resulted from the change in the distance caused within the X-Y plane can be absorbed.

Since the printed board 20 has the second curved portion 211 existing within the X-Y plane surrounded by the second straight line portion 210, third straight line portion 212, and fixation casing 10, the second straight line portion 210 bends into C-shape which expands in one direction, if the force is applied to the folding portion (straight line e) between the mounting stage connection side and the second straight line portion 210 by the movement of mounting stage 15, as a result, the distortional stress can be reduced. Therefore, the repulsive force can be reduced, and the force resulted from the movement of mounting stage 15 can be effectively absorbed. On the other hand, if the printed board 20 has the second curved portion 211 existing within the X-Y plane in the outside of the space surrounded by the second straight line portion 210, third straight line portion 212 and fixation casing 10, the second straight line portion 210 bends into S-shape which expands in the opposite two directions by the force applied to the folding portion (straight line e), as a result, the distortional stress is relatively increased. Therefore, the repulsive force can be increased, and the absorbed amount of the force resulted from the movement of mounting stage 15 can be reduced. The same thing will happen to the third straight line portion 212 which absorbs the force in the Y-axis direction. Accordingly, the printed board 20 does not disturb the movement of mounting stage 15 within the X-Y plane when the image blur suppression is performed.

The printed board 20 has its folding portion formed along the Z-axis direction at the corner portion 10b of the fixation casing 10, so the space around the lens barrel comprising a general circular form, i.e., the corner portion 10b of the fixation casing 10 can be effectively used. The growing in the camera size caused by providing a folding portion can be accordingly prevented.

Since the printed board 20 is provided with the connection extension portion 205 branched into the first connection extension portion 206 and the second connection extension portion 207 which can overlap each other, it is possible to increase the number of electrical transmission paths without increasing the width of connection extension portion 205, and it is possible to provide the folding portions within the limited space of the corner portion 10b of the fixation casing 10. Therefore, it is not necessary to provide the second extension portion 207, if the number of electric transmission paths is not many.

The printed board 20 is provided with the FPC auxiliary plate 213, so the printed board 20 is not bent in the place from the CCD connection portion 201 of the printed board 20 to the first curved portion 209 via the first straight line portion 208, and the force resulted from the movement of mounting stage 15 can be transferred to the third straight line portion 212, as a result, the force can be securely absorbed in the folding portions.

(Retention Control Circuit of Suppression Mechanism)

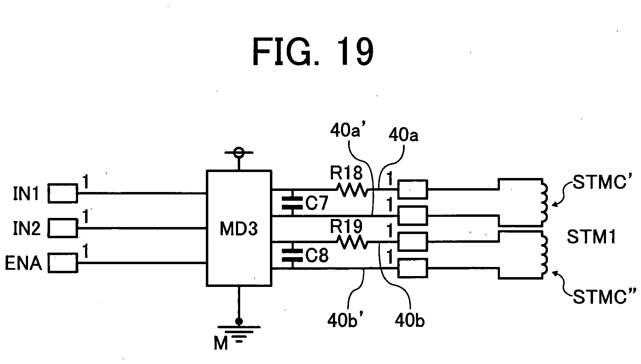

The stepping motor STM1 is controlled by a retention control circuit illustrated in FIG. 19. The stepping motor STM1 comprises a two-phase control structure, and includes a first coil STMC' having terminals connected the motor driver MD3 via output lines 40a, 40a' and a second coil STMC" having terminals connected to the motor driver MD3 via output lines 40b, 40b'. The output line 40a is provided with a resistance for limiting current R18, and also the output line 40b is provided with a resistance for limiting current R19. A capacitor C7 is disposed between the output line 40a and the output line 40a' and a capacitor C8 is also disposed between the output line 40b and the output line 40b'.

Retention control signals are input to the motor driver MD3 from ports IN1, IN2 of the processor 104, and an enable signal is input to a port ENA of the processor 104. The motor driver MD3 controls the power distribution to the stepping motor STM1 based on the retention control signals and the enable signal.

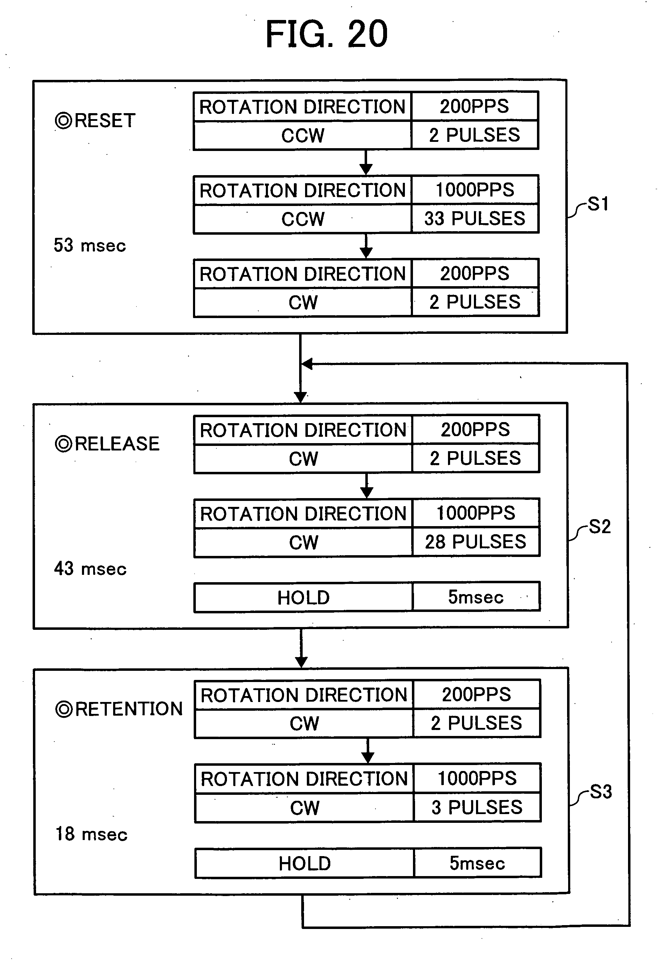

FIG.20 is a flow chart for explaining the operation of the retention control circuit, illustrating three steps such as a reset process, a release process and a retention process.

When the power switch SW13 of digital camera is turned on, at first, the reset process is performed according to the control of processor 104 (S.1). In this reset process, the stepping motor STM1 rotationally drives according to 2 pulses in the counter-clockwise direction at a slow rate of 200pps (pulse per second) by the control of processor 104. Next, the stepping motor STM1 rotationally drives according to 33 pulses in the counter-clockwise direction at a fast rate of 1000pps (pulse per second). Finally, the stepping motor STM1 rotationally drives according to 2 pulses in the clockwise direction at a slow rate of 200pps (pulse per second).

Wherever the cam pin 32 is in the rotation direction of the cam groove 31, the cam pin 32 physically has contact with the steep cliff 31d of the cam groove 31 by rotating the stepping motor STM1 according to 35 pulses in the counter-clockwise direction.

If the stepping motor STM1 drives according to 2 pulses in the clockwise direction from the contact position, the cam pin 32 is set in the incline start position 31e of the cam groove 31 (reference to FIG.13C). The state that the cam pin 32 is set in the incline start position 31e of the cam groove 31 is the reset position which corresponds to the state that the CCD 101 is forcibly retained in the origin position O. The origin position O is the central position of the movable area of the mounting stage 15. The time required from the power on to the completion of reset is about 53msec (millisecond).

In this suppression mechanism, the image blur suppression is carried out by tuning on the suppression switch SW14, and the image blur suppression is released at the same time as the suppression switch SW14 is turned off or the photographing is completed.

If the suppression switch SW14 is turned on, the release process is performed by the control of the processor 104 (S.2). In this release process, at first, the stepping motor STM1 rotationally drives according to 2 pulses in the clockwise direction at a slow rate of 200pps (pulse per second). Next, the stepping motor STM1 rotationally drives at 28 pulses in the clockwise direction at a fast rate of 1000pps (pulse per second). Finally, the power distribution to the stepping motor STM1 is maintained for 25msec (millisecond). Next, the power distribution to the stepping motor STM1 is stopped by the motor driver MD1.

With this release process, the cam pin 32 is located in the incline end position 31f of the cam groove 31 (reference to FIG. 13D). The time required from the incline start position 31e to the incline end position 31f is about 43msec (millisecond). More particularly, the time required that the cam pin 32 moves from the hold standby position to the release standby position is about 43msec (millisecond). The suppression control is performed in this release standby position.

Next, if the suppression switch SW14 is turned off or the photographing is performed, the processor 104 carries out the retention process (S.3). In this retention process, the stepping motor STM1 rotationally drives according to 2 pulses in the clockwise direction at a slow rate of 200pps (pulse per second) by the control of the processor 104, and then rotationally rotates according to 3 pulses in the clockwise direction at a fast rate of 1000pps (pulse per second). The cam pin 32, thereby, comes down to the flat valley floor portion 31a by passing through the flat peak portion 31b of the cam groove 31 to have contact with the flat valley floor portion 31a. After that, the power distribution to the stepping motor STM1 is maintained for 5msec (millisecond).

Next, the motor drive MD1 stops the power distribution to the stepping motor STM1. The cam pin 32 is, therefore, set in the incline start position 31e of the cam groove 31, and the central position of CCD 101 retained. While the power is supplied, if the reset process is performed, these release process and retention standby process are carried out. Moreover, the time required that the cam pin 32 moves from the release standby position to the retention standby position is about 18msec (millisecond).

Since the suppression mechanism includes the structure for forcibly retaining the mounting stage 15 of CCD 101 in the central position by the retainer pin 33 formed in the forced retainer plate 26, it is not necessary to control the power distribution for keeping the retention of the mounting stage 15 in the origin position; thus, the power consumption can be reduced when operating the suppression mechanism.

(Circuit Structure of Camera Shake Detection Circuit)

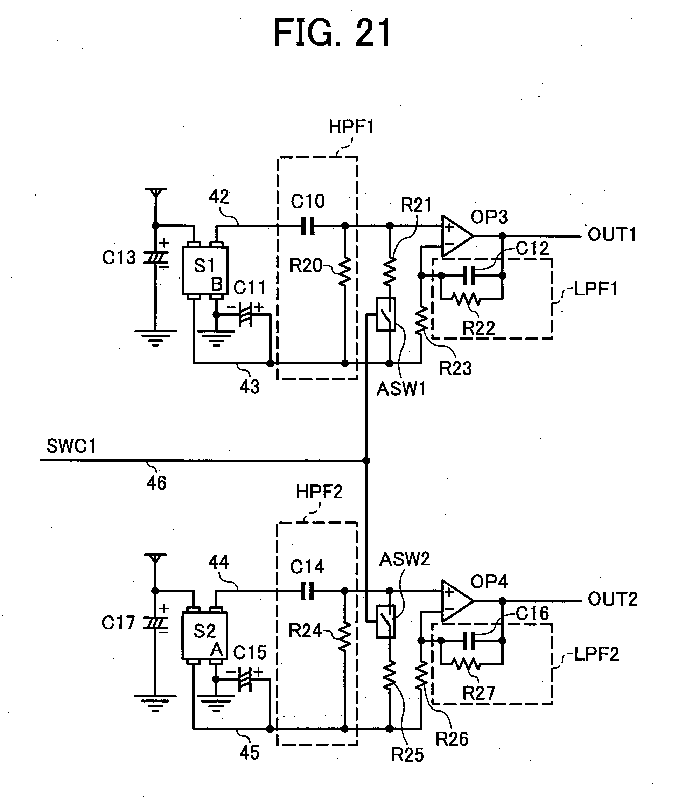

FIG.21 is a view illustrating a circuit structure of camera shake detection circuit. The camera shake detection circuit comprises an X-direction rotation detection portion, which detects the rotation in the X-direction, and a Y-direction rotation detection portion, which detects the rotation in the Y-direction.

The X-direction rotation detection portion comprise, for example, a piezoelectric vibration gyro sensor S1B having a first terminal grounded via a capacitor C13, a second terminal connected to a positive terminal of an operational amplifier OP3 via a capacitor C10 provided in a connection line 42, a third terminal connected to a negative terminal of the operational amplifier OP3 via a resistance R23 provided in a connection line 43, and a fourth terminal grounded and also connected to the connection line 43 via a capacitor C11.

The operational amplifier OP3 has the positive terminal connected to the connection line 43 via a resistance R20. A series body comprising a resistance R21 and a switching switch ASW1 is connected between the connection line 42 and the connection line 43 in parallel with the resistance R20.

The operational amplifier OP3 has an output terminal connected to a negative terminal of the operational amplifier OP3 via a capacitor C12 to which a resistance R22 is connected in parallel with the capacitor C12. The capacitor C10 and the resistance R10 make up a high-pass filter HPF1, and the capacitor C12 and the resistance R22 make up a low-pass filter LPF1. The operational amplifier OP3 amplifies the output of piezoelectric vibration gyro sensor S1B to output an X-direction detection signal OUT1 from the output terminal of operational amplifier OP3.

The Y-direction rotation detection portion comprises a piezoelectric vibration gyro sensor S2A having a first terminal grounded via a capacitor C17, a second terminal connected to a positive terminal of an operational amplifier OP4 via a capacitor C14 provided in a connection line 44, a third terminal connected to a negative terminal of the operational amplifier OP4 via a resistance R26 provided in a connection line 45, and a fourth terminal grounded and also connected to the connection line 45 via a capacitor C15.

The operational amplifier OP4 has the positive terminal connected to the connection line 45 via a resistance R24. A series body comprising a resistance R25 and a switching switch ASW2 is connected between the connection line 44 and the connection line 45 in parallel with the resistance R24. The operational amplifier OP4 has an output terminal connected to the negative terminal of the operational amplifier OP4 via a capacitor C16 to which a resistance R27 is connected in parallel with the capacitor C16. The capacitor C14 and the resistance R24 make up a high-pass filter HPF2, and the capacitor C16 and the resistance R27 make up a low-pass filter LPF2. The operational amplifier OP4 amplifies the output of piezoelectric vibration gyro sensor S2A to output an X-direction detection signal OUT2 from the output terminal of operational amplifier OP4.

A switching control signal SWC1 is into to the switching switches ASW1, ASW2 via a signal line 46. Each of the switching switches ASW1, ASW2 includes a function for accelerating the charge of each of the capacitors C11, C15, so as to increase the response speed of each of the high-pass filters HPF1, HPF2. The processor 104 outputs the switching control signal SWC1 to the switching switches ASW1, ASW2 for a predetermined time after turning on the power; thus, the switching switches ASW1, ASW2 are turned on for a predetermined time. The detection outputs OUT1, OUT2 of the gyro sensors S1B, S2A are loaded into the A/D converter 10411 every T second.

Where,

ω yaw (t) ... instant angular velocity in YAW direction

σ pitch (t)... instant angular velocity in PITCH direction

θ yaw (t)... angular variation in YAW direction

θ pitch (t)... angular variation in PITCH direction

Dyaw (t)... movement amount of image in X-direction corresponding to rotation in YAW direction.

Dpitch (t)... movement amount of image in Y-direction corresponding to rotation in PITCH direction,

θ yaw (t) and θ pitch (t) are obtained by the following relational expressions, θ yaw (t) = Σ ω yaw (i) · T

$$\theta \text{ pitch (t)} = \Sigma\ \omega \text{ pitch (i)} \cdot T.$$

Moreover, a focal length f is determined from a zoom point zp and a focal point fp. The following equations are established among Dyaw (t), the movement amount of image corresponding to rotation in the YAW direction, Dpitch (t), the movement amount of image corresponding to rotation in the PITCH direction, θ yaw (t), the angular variation in the YAW direction, and θ pitch (t), the angular variation in the PITCH direction,.

$$Dyaw\ (t) = f * \tan\ (\ \theta \text{ yaw (t)}\ )\ ...\ (i)$$

$$Dpitch\ (t) = f * \tan\ (\ \theta \text{ pitch (t)}\ )\ ...(ii)$$

Namely, Dyaw (t), the movement amount of image in the X-direction corresponding to rotation in the YAW direction and Dpitch (t), the movement amount of image in the Y-direction corresponding to rotation in the PITCH direction correspond the movement amount of CCD 101 which should be moved in the X-Y direction.

If the rotation displacements in the YAW direction and in the PITCH direction occur by the camera shake, the target position of CCD is calculated by the above (i), (ii) to drive the mounting stage 15 such that a difference between the actual position of the CCD 101 in the X-Y direction detected by the position detection element 1252 and the target position of the CCD 101 becomes zero. This control is performed every T second.

In addition, if the detection output of the gyro sensors S1B, S2A is zero, the mounting stage 15 is controlled such that the CCD 101 is translational displaced by following the translational movement displacement Xd of the camera body.

(Suppression Control Circuit)

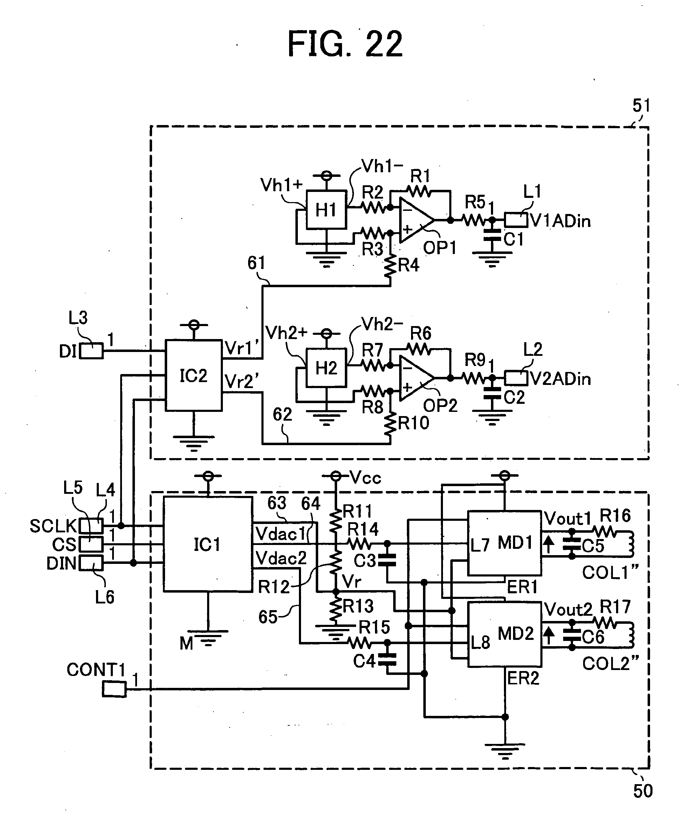

FIG.22 is a block diagram illustrating one example of a control circuit for suppressing an image blur. The suppression circuit comprises a feedback circuit 50 and a position correspondence voltage setting circuit 51.

The hall elements H1, H2 comprise a part of the position correspondence voltage setting circuit 51. Predetermined voltage Vh1-is applied to the hall element (1252a) H1. The hall element H1 has a negative terminal connected to a negative terminal of an operational amplifier OP1 via a resistance R1 and the other terminal connected to a positive terminal of the operational amplifier OP1 via a resistance R3.

The operational amplifier OP1 has an output terminal connected to an input port L1 of the processor 104 via a resistance R5 and also connected to the negative terminal of the operational amplifier OP1 via the resistance R1. In addition, the connection point between the resistance R5 and the input port L1 is grounded via a capacitor C1.

Predetermined voltage Vh2- is applied to the hall element (1232b) H2. The hall element H2 has one terminal connected to a negative terminal of an operational amplifier OP2 via a resistance R7 and the other terminal connected to a positive terminal of the operational amplifier OP2 via a resistance R8.

The operational amplifier OP2 has an output terminal connected to an input port L2 of the processor 104 via a resistance R9 and also connected to the negative terminal of operational amplifier OP2 via a resistance R6. In addition, the connection point between the resistance R9 and the input port L2 is grounded via a capacitor C2.

The processor 104 has an output port L3 connected to a D/A conversion circuit IC2 comprising a part of the position correspondence voltage setting circuit 51, output ports L4, L6 connected to the D/A conversion circuit IC2 and the D/A conversion circuit IC1, and an output port L5 connected to the D/A conversion circuit IC1.

Connected to the D/A conversion circuit IC2 are two output lines 61, 62, one output line 61 being input to the positive terminal of operational amplifier OP1 via a resistance R4 and the other output line 62 being input to the positive terminal of operational amplifier OP2 via a resistance R10.

A chip selector signal DI from the output port L3, a clock signal SCLK from the output port L4, and correction digital data DIN from the output L6 are input to the D/A conversion circuit IC2 having a function which converts the correction digital data into the analogue data.

The D/A conversion circuit IC1 comprises a part of the feedback circuit 50. A common line 63 and two output lines 64, 65 are connected to the D/A conversion circuit IC1. The common line 63 is connected to the coil drive circuits MD1, MD2. The output line 64 is connected to an input terminal L7 of the coil drive circuit MD1 via a resistance R14. The output line 65 is connected to an input terminal L8 of the coil drive circuit MD2 via a resistance R15.

The connection point between the resistance R14 and the input terminal L7 is connected to a ground terminal ER1 of the coil drive circuit MD1 via a capacitor C3. The connection point between the resistance R15 and the input terminal L8 is connected to a ground terminal ER2 of the coil drive circuit MD2 via a capacitor C4. The common line 63 is connected to a power source Vcc via resistances R12, R11, and this connection point is grounded via a resistance R13.

A control signal CONT1 is input to the coil drive circuits MD1, MD2 from the processor 104. The coil drive circuit MD1 has an output terminal connected to a coil COL1" (serial connection body of coil body COL1 and coil body COL1') via a resistance R16 and connected to a capacitor C5 in parallel with the serial body of the resistance R16 and the coil COL1". The coil drive circuit MD2 has an output terminal connected to a coil COL2" (serial connection body of coil body COL2 and coil body COL2') via a resistance R17 and connected to a capacitor C6 in parallel with the serial body of the resistance R17 and the coil body COL2". The coil COL 1" moves the mounting stage 15 in the X-direction, and the coil COL2" moves the mounting stage 15 in the Y-direction.

Here, predetermined voltages Vh1-, Vh2- are applied to the hall elements H1, H2, respectively, and the detection output voltage levels of the hall elements H1, H2 are configured to be Vh1, Vh2 when the detection outputs of the gyro sensors S1B, S2A are zero and also the CCD 101 exists in the central position (origin) of the movable area. In this case, the analogue output voltage levels of the input ports L1, L2 of the processor 104 are configured to be V1ADin, V2ADin, respectively. These output voltage levels V1ADin, V2ADin are actually measured.

The output voltage levels (actual measurement values) V1ADin, V2ADin are varied based on the assembling error factor regarding the mechanical positional relationship between the magnets (permanent magnet) 16a-16d and the hall elements H1, H2, the assembling error factor between the mounting positions of the hall elements H1, H2 and the mounting positions of the coils COL1", COL2" with respect to the mounting stage 15, or the like. In addition, the output voltage levels vary according to the characteristics of the hall elements H1, H2.

Therefore, if correction is not performed, the detection values of the hall elements H1, H2 corresponding to the origin position vary for each of cameras; thus, accurate image blur suppression can not be conducted.

Consequently, correction voltages Vr1', Vr2', which are input to the operational amplifiers OP1, OP2 respectively from the analogue/digital converter IC2, are set, such that the output voltage levels V1ADin, V2ADin before correcting become constant voltage levels (setting reference voltage levels). More particularly, the correction voltages Vr1', Vr2' are set so as to correct the variations in the output voltage levels (detection values) V1ADin, V2ADin when the CCD 101 exists in the origin position and the CCD 101 is not controlled (when the power is not supplied to the coil bodies COL1", COL2").

In this case, in order to set the setting reference voltage level, for example, 1.7 volts which is substantially a central value of movable range voltage of the operational amplifiers OP1, OP2, the processor 104 performs the following calculation.

Here, for the sake of convenience, the resistances are set to R2 = R3 = R7= R8, R1 = R4 = R10 = R6, but not limited thereto.

Under the conditions of R2 = R3 = R7 = R8, R1 = R4 = R10 = R6, the following relational expressions are realized.

$$V1ADin = R1 / R2 * ((Vh1+) \cdot (Vh1\cdot)) + Vr1'$$

$$V2ADin = R1 / R2 * ((Vh2+) \cdot (Vh2\cdot)) + Vr2'$$

The processor 104 obtains the correction voltages Vr1', Vr2' by the calculation based on the above relational expressions. As a result, even if the detection values of hall elements H1, H2 in the origin position of the CCD 101 vary based on the assembling error factor regarding the mechanical positional relationship between the magnets (permanent magnets) 16a-16d and the hall elements H1, H2, the assembling error factor between the mounting positions of the hall elements H1, H2 and the mounting positions of the coils COL1", COL2" with respect to the mounting stage 15, or the like, the CCD 101 can be moved in accordance with the correction amount detected by the gyro sensors.

The processor 104 comprises, together with the D/A conversion circuit IC2, a part of variation correction circuit, which outputs correction values for setting the detection values to the setting reference voltage levels regardless of the variations in the detection values of hall elements H1, H2, and also functions as a correction value calculation device which obtains the setting reference voltage values by the calculations.

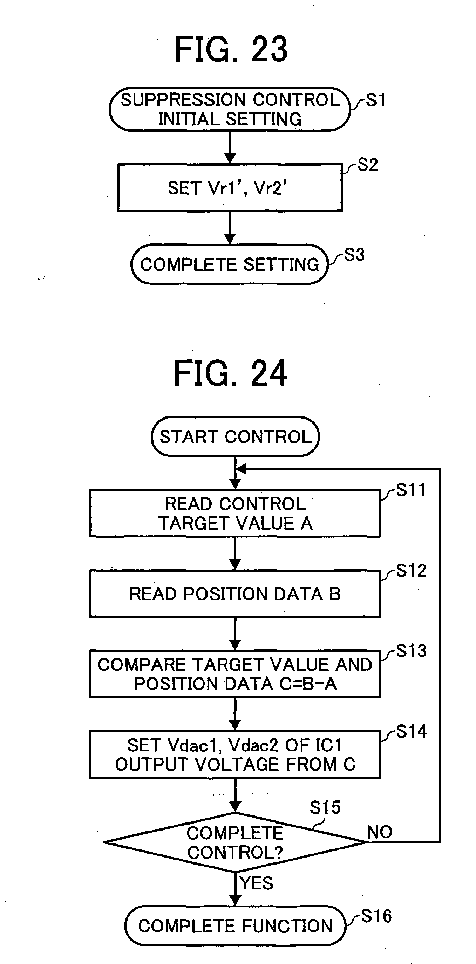

This initial setting is set before shipment which is a final inspection in a factory for assembling a camera, as illustrated in the flow chart of FIG.23 (reference to S.1-S.3).

As presented in the flow chart of FIG.24, in the actual control of image blur suppression, the processor 104 loads the control target values obtained by the calculations based on the detection outputs OUT1, OUT2 of the camera shake detection circuit (S. 11), and then loads the actual position correspondence voltage levels V1ADin, V2ADin obtained by the hall elements H1, H2 (S. 12); thereby, the processor 104 calculates the difference between the control target values and the position correspondence voltage values V1ADin, V2ADin (S. 13).

The processor 104 outputs the control data to the digital/analogue conversion circuit IC1 based on the output of the difference. The digital/analogue conversion circuit IC1 outputs the control voltages Vdac1, Vdac2 corresponding to the control data (S. 14). The control voltages Vdac1, Vdac2 are input to the coil drive circuits MD1, MD2. The coil drive circuits MD1, MD2 output the driving voltages Vout1, Vout2 to the COL1", COL2", respectively.

The driving voltages Vout1, Vout2 are set according to the following equations.

$$Vout1 = (Vdac1 \cdot Vr) * K$$

$$Vout2 = (Vdac2 \cdot Vr) * K$$

Where, Vr is division voltage.

In this case, reference number K is a ratio constant based on the division voltage, Vr.

The CCD 101 is attracted and repelled by the magnetic field of the magnets 16a-16d and the coils COL1", COL2" to move in the direction which is controlled by the driving voltages Vout1, Vout2 of positive voltage or negative voltage. The detected values of hall elements H1, H2 are, thereby, changed. The position correspondence voltage levels V1ADin, V2ADin are changed corresponding to the change in the detected values, and the position correspondence voltage levels are fed back to the processor 104, so the CCD 101 can be smoothly followed to the target position when the control target values are changed by the detection output values of the camera shake detection circuit (S.15). If the photographing is completed, the control is concluded (S.16).

(Modification Example)

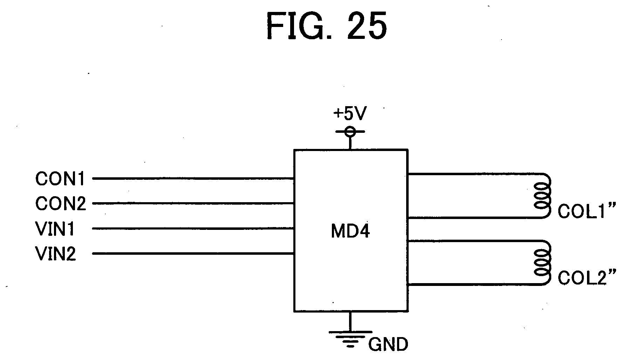

FIG.25 is a circuit diagram illustrating a modification example of the feedback circuit 50. In this case, the processor 104 controls the driving of coil driver MD4 by means of PWM control (pulse width modulation control), so as to control the power distribution to the coils COL1", COL2".

More particularly, a normal direction rotation signal CON1 and a reverse direction rotation signal CON2 are input to the coil driver MD4, together with a pulse signal, and pulse voltages Vin1, Vin2 are also input to the coil driver MD4. The power distribution voltages to the coils COL1", COL2" increase as the duration of high level of the pulse signal gets longer. (Details of Photographing by Suppression Mechanism)

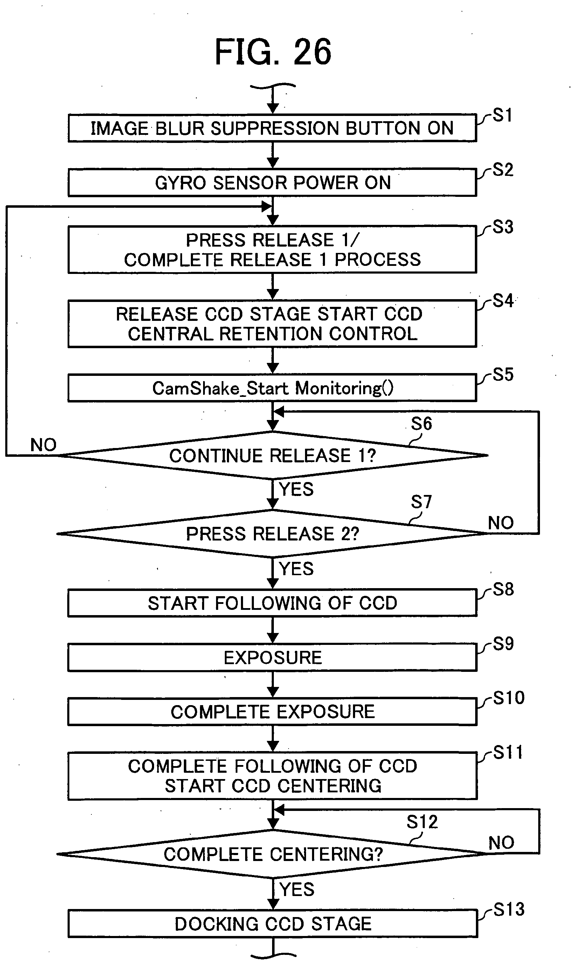

As illustrated in FIG.26, if the suppression switch SW14 is turned on (S.1), the gyro sensors S1B, S2A are powered on (S.2). If the release switch SW1 is pressed to complete the half-pressing (S.3), the auto focusing operation (focusing operation) is initiated (S.4). At the same time, the mechanical forced fixation of mounting stage 15 is released, and the CCD central retention control is initiated by the power distribution to the coils COL1", COL2" (S.4).

Next, the monitoring process by camera shake is initiated (S.5). The processor 104 determines whether or not the half-pressing of release switch SW1 is continued (S.6). If the half-pressing of release switch SW1 is continued, the processor 104 determines whether or not the full-pressing of release switch SW 1 is performed (S.7). If the half-pressing of release switch SW1 is released, the flow goes back to step S.3, and if the full-pressing of release switch SW1 is not performed, the flow goes back to step S.6.

If the full-pressing of release switch SW1 is completed, the following of the CCD 101 is started in the moving direction of image (S.8). Next, the exposure is performed (S.9). If the exposure is completed (S.10), the following of the CCD 101 is stopped (S.11), the mounting stage 15 is returned to the origin position by the power distribution control to the coils COL1", COL2" (S.11), it is determined whether or not the mounting stage 15 is returned to the origin position (S. 12), and the CCD is forcibly fastened to the position of origin position in a mechanical manner (S. 13).

There are two modes for the operation timing of release switch SW1.

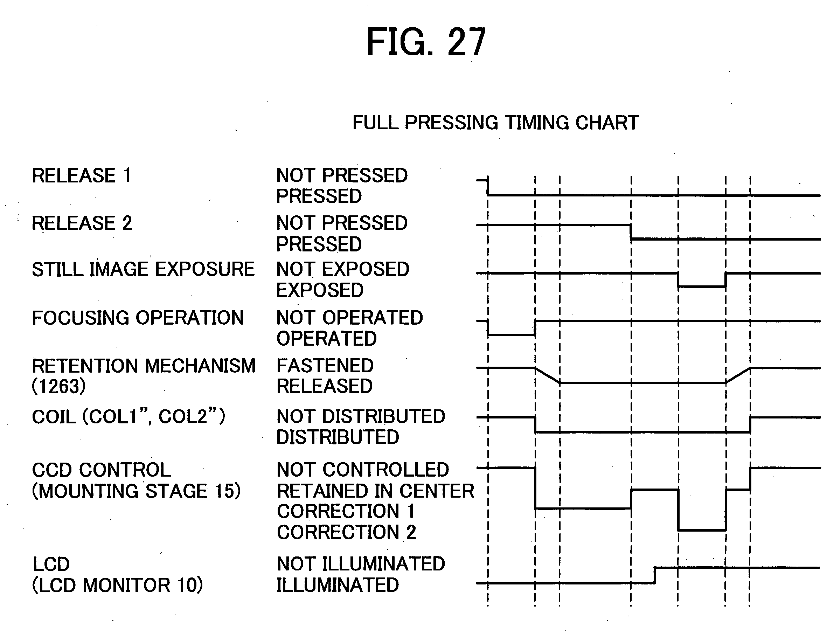

FIG.27 is the timing chart of process for suppressing an image blur in case of the full-pressing of release switch SW1. In this case, the full-pressing means release operation having discontinuity from the half-pressing operation of release switch SW 1 to the full-pressing operation of release switch SW1, for example, photographing operation which moves to exposure start operation at the right moment after the half-pressing operation.

If the release switch SW1 is half-pressed, the focusing operation of digital camera is started. In this state, the origin position forced retention mechanism 1263 has not released the forced retention of the mounting stage 15 yet. The power is not supplied to the coils COL1", COL2". In addition, the mounting stage 15 is mechanically fixed to the central position, and the subject image is displayed onto the LCD monitor 10.

If the focusing operation is completed, the processor 104 starts the power distribution to the stepping motor STM1 of the origin position forced retention mechanism 1263. The mechanical forced retention of the mounting stage 15 is, thereby, released. At the same time, the power distribution to the coils COL1", COL2" is started, and the suppression process (correction 1) during the half-pressing operation of release switch SW1 (release 1) is conducted by the control of power distribution to the coils COL1", COL2". If the release switch SW1 is fully pressed (release 2), the mounting stage 15 is once returned to the central position by the control of power distribution to the coils COL1", COL2", and then the LCD monitor 10 is turned off after some time so as not to display the subject image.

Next, if the still image exposure is started, the mounting stage 15 is controlled to follow the movement of image based on the camera shake (correction 2). If the still image exposure is completed, the mounting stage 15 is returned to the central position based on the control of power distribution to the coils COL1", COL2". Next, the processor 104 starts the power distribution to the stepping motor STM1 of the origin position forced retention mechanism 1263. The mechanical forced fixation of mounting stage 15 is, thereby, performed, and then the power distribution to the coils COL1", COL2" is stopped.

As described above, even if the camera is shaken, a user can recognize the LCD monitor 10 to monitor the subject image without having the camera shake during the release 1.

In addition, if the mounting stage 15 is returned to the central position during the release 2, the composition during the release 2 is displaced with respect to the composition of subject image during the release 1. However, according to the present embodiment, it is possible to confirm the subject image right before photographing in a state that the mounting stage 15 is once returned to the central position, so it is possible to confirm the composition of subject image right before photographing (right before exposing).

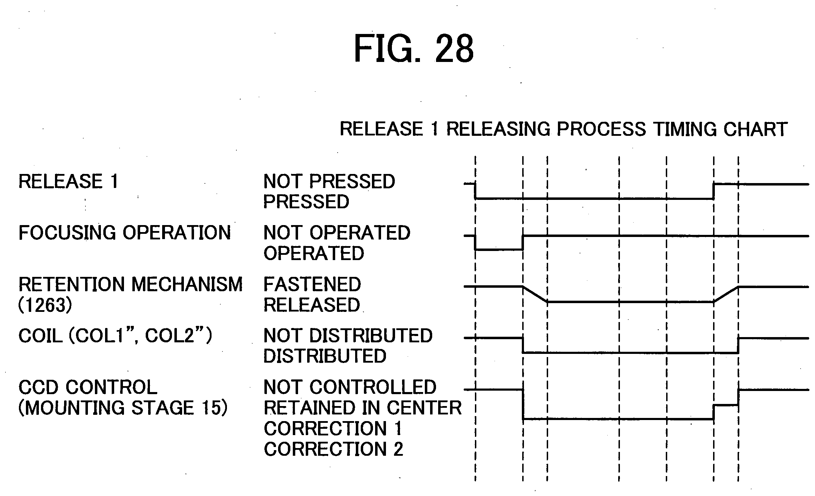

If the release switch SW1 is half-pressed, and the half-pressing of release switch SW1 is released without fully pressing the release switch SW1, as presented in FIG. 28, the focusing operation is started at the same time as the half-pressing. If the focusing is completed, the processor 104 starts the power distribution to the stepping motor STM1 of the origin position forced retention mechanism 1263; thereby, the mechanical forced retention of mounting stage 15 is released. At the same time, the power distribution to the coils COL1", COL2" is started, and the suppression process during the half-pressing operation of release switch SW1 (release 1) is performed by the control of power distribution to the coils COL1", COL2".

If the half-pressing operation of release switch SW1 is released during the half-pressing operation of release switch SW1, the mounting stage 15 is retuned to the central position based on the control of power distribution to the coils COL1", COL2". Next, the processor 104 starts the power distribution to the stepping motor STM1 of the origin position forced retention mechanism 1263; thereby, the mechanical fixation and retention of the mounting stage 15 is conducted. Next, the power distribution to the coils COL1", COL2" are stopped.

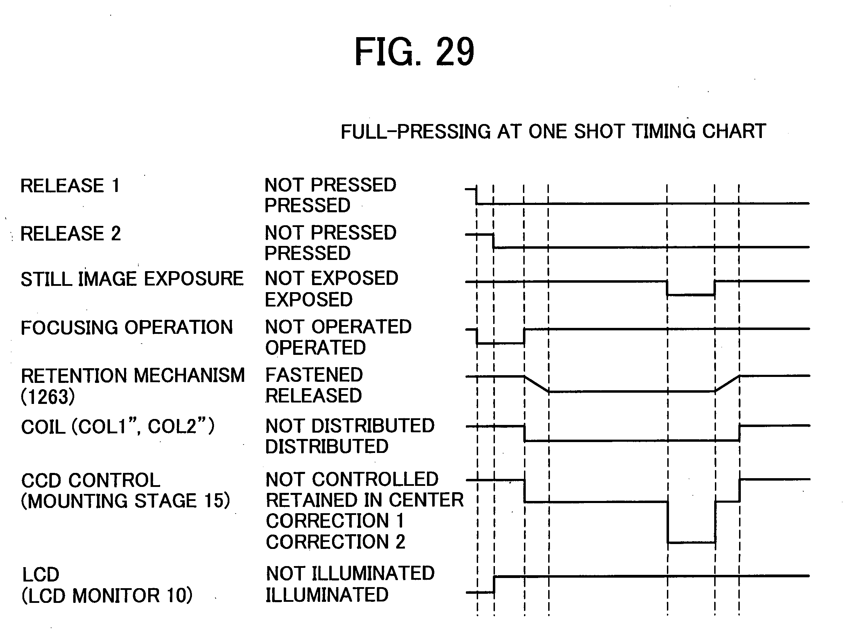

FIG.29 is a timing chart illustrating the suppression process when the release switch SW 1 is fully pressed at one shot. In this case, the full-pressing at one shot means release operation having continuousness from the half-pressing operation (release 1) of release switch SW1 to the full-pressing operation (release 2) of release switch SW1, for example, photographing operation which immediately moves to exposure start operation after the half-pressing.

If the release switch SW1 is half-pressed, the focusing operation of digital camera is started. The subject image is displayed on the LCD monitor 10. In addition, the full-pressing operation of release switch SW1 is immediately performed right after the half-pressing of the release switch SW1. At the same time, the LCD monitor 10 is turned off so as not to display the subject image.

If the focusing operation is completed, the processor 104 starts the power distribution to the stepping motor STM1 of the origin position forced retention mechanism 1263; thereby, the mechanical retention of the mounting stage 15 is released. At the same time, the power distribution to the coils COL1", COL2" are started, and the mounting stage 15 is retained in the central position by the power distribution control to the coils COL1", COL2". Therefore, the suppression process is performed.

If the mounting stage 15 is maintained in the central position by the power distribution to the coils COL1", COL2", and the still image exposure is started, the mounting stage 15 is controlled to follow the movement of image based on the camera shake. If the still image exposure is completed, the mounting stage 15 is returned to the central position based on the power distribution control to the coils COL1", COL2". Next, the processor 104 starts the power distribution to the stepping motor STM1 of the origin position forced retention mechanism 1263; thereby, the mechanical fixation and retention of the mounting stage 15 is performed. Next, the power distribution to the coils COL1", COL2" is stopped.

In case of the above described full-pressing at one shot, it is considered that the confirmation of the composition is completed during the operation of release 1, so it is not necessary to confirm the composition during the release 2. Accordingly, it is considered that the reconfirmation of the composition is not necessary even if the mounting stage 15 is once returned to the central position during the release 2, so the suppression control process can be simplified.

Moreover, since the LCD monitor 10 is turned off during the focusing operation, the battery drain can be avoided.

Furthermore, since the abortion bar 35 (reference to FIG. 9A) can be absorbed to the magnets 16b, 16d to be retained when the mounting stage 15 is forcibly pressed to the origin position in a mechanical manner, the chattering of the mounting stage 15 in the Z-axis direction is controlled. In addition, even if the mounting stage 15 is not placed in the origin position, the absorption bar 35 is absorbed to the magnets 16b, 16d to be retained; thus, the chattering in the Z-axis direction is controlled.

With the digital camera as the imaging apparatus having the suppression function according to the present invention, since the forced retainer plate 26 presses the retainer pin 33 fitting to the concave portion 19a, the CCD 101 as the image pick-up device is fastened to be retained in the origin position that the optical center of the CCD 101 conforms to the origin. Accordingly, unlike a digital camera having a CCD retained by an elastic member, the CCD 101 is not displaced from the origin position even if the shaking of camera occurs; thus, the image blur suppression can be immediately and appropriately performed when the image blur suppression is required. In this case, the optical center of CCD 101 means a central position of area that the CCD 101 can receive light as a signal.

In addition, the origin position forced retention mechanism 1263 fastens the CCD 101 to be retained by way of the mechanical structure which fits the retainer pin 33 of the forced retainer plate 26 into the concave portion 26a, so it is not necessary to keep applying electric current to the coils COL1", COL2" for fastening the CCD 101 to be retained in the origin position; thus, it is possible to prevent increase in the power consumption.

The forced retainer plate 26 as a pressing member has contact with the CCD 101 from the side opposite to the imaging surface; thus, the subject image can be received by the CCD 101 without being disturbed by the forced retainer plate 26.

By fitting the retainer pin 33 as a fitting projection into the concave portion 19a as a fitting hole, the forced retainer plate 26 and the protection plate 19 attached to the back plane of CCD 101 fasten the CCD 101 to be retained; thus, the CCD 101 can be securely fastened to be retained without using a complicated structure.

Since the retainer pin 33 and the concave portion 19a comprise a taper shape to fit each other, the retainer pin 33 and the concave portion 19a smoothly fit each other.

The origin position forced retention mechanism 1263 uses the mechanism which converts the rotation driving force from the stepping motor STM1 by the conversion mechanism 22; thus, the conversion mechanism 22 can be disposed in the corner portion 10a of the fixation casing 10.

The rotation transferring gear 23 is constantly rotated in a certain direction in the release process and retention process, so it is possible to control the rotation with high accuracy without considering the error by the backlash provided between the rotation transferring gear 23 and the output gear 21.

In addition, in the above embodiment, the origin position forced retention mechanism 1263 has the structure which fits the retainer pin 33 of the forced retention plate 26 as a pressing member into the concave portion 19a of the back plane of the CCD 101, but the structure is not limited to the above embodiment as long as the CCD 101 can be mechanically fastened to be retained in the origin position. For example, the structure can be configured to attach a magnet to the forced retainer plate 26 so as to use the absorption power.

In the above embodiment, the origin position forced retention mechanism 1263 has the structure which presses the CCD 101 by the forced retainer plate 26 from the back plane side, but the structure is not limited to the above embodiment as long as the CCD 101 can be mechanically fastened to be retained in the origin position. For example, the structure is configured to provide in the CCD stage 1251 a retention claw capable of entering and leaving for fastening the mounting stage 15 within the X-Y plane.

In the above embodiment, the retainer pin 33 and the concave portion 19a comprise a taper shape, respectively, but the shapes of the retainer pin 33 and the concave portion 19a are not limited to the taper shape. Either the retainer pin 33 or the concave portion 19a can be the taper shape.

The rotation transferring gear 23 is constantly rotated in a certain direction in the release process and the retention process, but the rotation direction is not limited to the above embodiment. The control for fastening and releasing the CCD 101 by the forced retainer plate 26 can be performed by appropriately rotating the rotation transferring gear 23 in the opposite direction.

In the above embodiment, the conversion mechanism 22 is provided in the corner portion 10a of the fixation casing 10, but it is not limited to the above embodiment as long as it converts the rotation movement of rotation driving source into liner motion. For example, it is possible to have a structure that a motor as a rotation driving source and a rotation transferring gear which moves away from and comes close to the CCD 101 by receiving the rotation are provided in the back plane of CCD 101, so as to use the rotation transferring gear as a pressing member by attaching a retainer pin to the rotation transferring gear.

**Claims**

1. An imaging apparatus having a function for suppressing an image blur, comprising:

   a mechanism for suppressing the image blur, with an origin position defined by an intersection of an X-Y plane orthogonal to a photographing optical axis Z-axis with the Z-axis, which calculates, as a target value, a movement amount of an image by detecting camera shake with a camera shake detection sensor (1241), detects an actual position of an image pick-up device (101) that forms a subject image by using a position detection element (1252), and moves the image pick-up device (101) to follow an image of the subject moved by the camera shake based on a difference between the target value and a displacement amount from the origin position, at which the optical center of the image pick-up device (101) is located, based on the detection value of the position detection element (1252);
   an origin position forced retention mechanism (1263) provided in the suppression mechanism, which mechanically fastens the image pick-up device to be retained in the origin position;
   the suppression mechanism comprises a mounting stage (1251) which mounts the image pick-up device (101), the mounting stage being moved within the X-Y plane by operation of the suppression mechanism, and the origin position forced retention mechanism (1263) includes a pressing member (26) which has contact with the image pick-up device (101) along the Z-axis direction from a side opposite to an imaging plane of the image pick-up device and fastens the image pick-up device to be retained in the origin position, when the suppression mechanism is not operated;.
   wherein the image pick-up device (101) is provided with either a fitting hole (19a) or a fitting projection (33), and the pressing member (26) is provided with the other; and **characterized in that**
   the origin position forced retention mechanism (1263) comprises a rotation driving source (STM1) and a conversion mechanism (22) which is configured to convert rotational movement of the rotation driving source into linear motion, and the pressing member (26) forms a part of the conversion mechanism and is configured to move away from and come close to the mounting stage (1251) along the Z-axis direction by driving force from the rotation driving source (STM1) so that the fitting projection (33) closely fits into the fitting hole (19a) in order to fulfil the function for mechanically retaining the mounting stage (1251) on the origin position and separates from the fitting hole (19a) to release the mounting stage (1251), respectively.

2. The imaging apparatus having a function for suppressing the image blur according to claim 1, wherein at least one of the fitting hole (19a) and the fitting projection (33) comprises a taper shape.

3. The imaging apparatus having a function for the image blur according to claim 1, wherein the conversion mechanism (22) comprises a reciprocating shaft (24) which extends in the Z-axis direction in an outward of a circumference wall of a fixation casing, and is provided in a displaceable manner in the Z-axis direction, a rotation transferring gear (23) capable of transferring a displacement force in the Z-axis direction to the reciprocating shaft (24), which is rotatably supported by the reciprocating shaft and engages with an output gear (21) attached to the rotation driving source, and a cam pin (32) which is contactable to the rotation transferring gear (23) and extends in the Z-axis direction, the rotation transferring gear (23) is provided with a cam groove (31) which extends in the circumference direction and hollows in the Z-axis direction so as to receive the cam pin (32), the cam groove (31) comprises a flat peak plane (31b) and a flat valley floor plane (31a), each having a different depth of the cam groove, an inclined plane (31c) which continuously inclines from the flat valley floor plane (31a) toward the flat peak plane (31b) and a contact wall (31f) which rises in the Z-axis direction in a boundary position between the flat peak plane (31b) and the flat valley floor plane (31a), and the pressing member (26) extends along the X-Y plane and is attached to the reciprocating shaft (24).

4. The imaging apparatus having a function for the image blur according to claim 3, wherein the suppression mechanism rotates the rotation transferring gear (23) only in a normal rotation direction that the cam pin (32) slides the inclined plane (31c) from the flat valley floor plane (31a) to the flat peak plane (31b) for operation of fastening the image pick-up device (101) to be retained by the origin position forced retention mechanism (1263) and operation of releasing retention.

5. The imaging apparatus having a function for suppressing the image blur according to claim 2 or claim 4, wherein the origin position forced retention mechanism (1263) fastens the image pick-up device (101) when the cam pin (32) has contact with the flat valley floor plane (31a) of the cam groove (33) and releases the image pick-up device (101) that the cam pin (32) has contact with the flat peak plane (31b).

6. The imaging apparatus having a function for suppressing the image blur according to any one of claims 3 to 5, wherein the suppression mechanism performs the reset process which rotates the rotation transferring gear (23) in the normal rotation direction till the cam pin 932) reaches an incline start position (31e) of a boundary between the flat valley floor plane (31a) and the inclined plane (31c) after rotating the rotation transferring gear (23) one time in a reverse rotation direction.

**Patentansprüche**

1. Bildgebungsvorrichtung mit einer Funktion zum Unterdrücken einer Bildunschärfe, umfassend:

einen Mechanismus zum Unterdrücken einer Bildunschärfe, wobei eine ursprüngliche Position durch einen Schnittpunkt einer X-Y-Ebene orthogonal zu einer optischen Fotografierachse Z-Achse mit der Z-Achse definiert ist, der als einen Zielwert einen Bewegungsbetrag eines Bildes durch Erfassen von Kameraverwacklung mit einem Kameraverwacklungs-Erfassungssensor (1241) berechnet, eine tatsächliche Position einer Bildaufnahmevorrichtung (101) erfasst, die ein Motivbild unter Verwendung eines Positionserfassungselements (1252) bildet, und die Bildaufnahmevorrichtung (101) bewegt, um einem Bild des Motivs zu folgen, das durch die Kameraverwacklung bewegt wird, basierend auf einem Unterschied zwischen dem Zielwert und einem Verschiebungsbetrag von der ursprünglichen Position, bei der die optische Mitte der Bildaufnahmevorrichtung (101) basierend auf dem Erfassungswert des Positionserfassungselements (1252) angeordnet ist;
einen Zwangsrückhaltemechanismus der ursprünglichen Position (1263), der in dem Unterdrückungsmechanismus bereitgestellt ist, der die Bildaufnahmevorrichtung mechanisch befestigt, um in der ursprünglichen Position zurückgehalten zu werden;
wobei der Unterdrückungsmechanismus eine Halterung (1251) umfasst, die die Bildaufnahmevorrichtung (101) montiert, wobei die Halterung in der X-Y-Ebene durch Betrieb des Unterdrückungsmechanismus bewegt wird und der Zwangsrückhaltemechanismus der ursprünglichen Position (1263) ein Druckelement (26) umfasst, das in Kontakt mit der Bildaufnahmevorrichtung (101) entlang der X-Achsenrichtung von einer Seite ist, die einer Bildgebungsebene der Bildaufnahmevorrichtung gegenüberliegt und die Bildaufnahmevorrichtung befestigt, die in der ursprünglichen Position zurückgehalten werden soll, wenn der Unterdrückungsmechanismus nicht betrieben wird;
wobei die Bildaufnahmevorrichtung (101) mit entweder einem Passloch (19a) oder einem Passvorsprung (33) bereitgestellt ist und das Druckelement (26) mit dem anderen bereitgestellt ist; und **dadurch gekennzeichnet, dass** der Zwangsrückhaltemechanismus der ursprünglichen Position (1263) eine Drehungsantriebsquelle (STM1) und einen Umwandlungsmechanismus (22) umfasst, der konfiguriert ist, um eine Drehbewegung der Drehungsantriebsquelle in eine lineare Bewegung umzuwandeln und das Druckelement (26) einen Teil des Umwandlungsmechanismus bildet und konfiguriert ist, um sich wegzubewegen und der Halterung (1251) entlang der Z-Achsenrichtung durch Antriebskraft von der Drehungsantriebsrichtung (STM1) näherzukommen, sodass der Passvorsprung (33) entsprechend eng in das Passloch (19a) passt, um die Funktion zum mechanischen Befestigen der Halterung (1251) in der ursprünglichen Position zu erfüllen, und sich von dem Passloch (19a) trennt, um die Halterung (1251) freizugeben.

2. Bildgebungsvorrichtung mit einer Funktion zum Unterdrücken einer Bildunschärfe nach Anspruch 1, wobei mindestens eines aus dem Passloch (19a) und dem Passvorsprung (33) eine verjüngte Form umfasst.

3. Bildgebungsvorrichtung mit einer Funktion für die Bildunschärfe nach Anspruch 1, wobei der Umwandlungsmechanismus (22) eine sich hin- und herbewegende Welle (24), die sich in der Z-Achsenrichtung in einem Äußeren einer Umfangswand eines Befestigungsgehäuses erstreckt und auf eine versetzbare Weise in der Z-Achsenrichtung bereitgestellt ist, ein Drehungsübertragungszahnrad (23), das in der Lage ist, eine Verschiebungskraft in der Z-Achsenrichtung zu der sich hin- und herbewegenden Welle (24) zu übertragen, das durch die sich hin- und herbewegende Welle drehbar gestützt ist und mit einem Ausgangszahnrad (21), das an der Drehungsantriebsquelle befestigt ist, in Eingriff ist, und einen Nockenstift (32) umfasst, der mit dem Drehungsübertragungszahnrad (23) in Kontakt gebracht werden kann und sich in der Z-Achsenrichtung erstreckt, wobei das Drehungsübertragungszahnrad (23) mit einer Nockennut (31) bereitgestellt ist, die sich in der Umfangsrichtung erstreckt und sich in der Z-Achsenrichtung vertieft, um den Nockenstift (32) aufzunehmen, wobei die Nockennut (31) eine flache Spitzenebene (31b) und eine flache Talbodenebene (31a), wobei jede eine unterschiedliche Tiefe der Nockennut hat, eine geneigte Ebene (31c), die sich von der flachen Talbodenebene (31a) zu der flachen Spitzenebene (31b) kontinuierlich neigt, und eine Kontaktwand (31f) umfasst, die in der Z-Achsenrichtung in einer Grenzposition zwischen der flachen Spitzenebene (31b) und der flachen Talbodenebene (31a) ansteigt, und sich das Druckelement (26) entlang der X-Y-Ebene erstreckt und an der sich hin- und herbewegenden Welle (24) befestigt ist.

**4.** Bildgebungsvorrichtung mit einer Funktion für die Bildunschärfe nach Anspruch 3, wobei der Unterdrückungsmechanismus das Drehungsübertragungszahnrad (23) nur in einer normalen Drehrichtung dreht, dass der Nockenstift (32) die geneigte Ebene (31c) von der flachen Talbodenebene (31a) zu der flachen Spitzenebene (31b) zum Betrieb der Befestigung der Bildaufnahmevorrichtung (101), die durch den Zwangsrückhaltemechanismus der ursprünglichen Position (1263) zurückgehalten werden soll, und zum Betrieb des Freigebens des Zurückhaltens schiebt.

**5.** Bildgebungsvorrichtung mit einer Funktion zum Unterdrücken der Bildunschärfe nach Anspruch 2 oder Anspruch 4, wobei der Zwangsrückhaltemechanismus der ursprünglichen Position (1263) die Bildaufnahmevorrichtung (101) befestigt, wenn der Nockenstift (32) in Kontakt mit der flachen Talbodenebene (31a) oder der Nockennut (33) ist und die Bildaufnahmevorrichtung (101) freigibt, dass der Nockenstift (32) mit der flachen Spitzenebene (31b) in Kontakt ist.

**6.** Bildgebungsvorrichtung mit einer Funktion zum Unterdrücken der Bildunschärfe nach einem der Ansprüche 3 bis 5, wobei der Unterdrückungsmechanismus den Zurücksetzungsprozess durchführt, der das Drehungsübertragungszahnrad (23) in der normalen Drehrichtung dreht, bis der Nockenstift 932) eine Neigungsstartposition (31e) einer Grenze zwischen der flachen Talbodenebene (31a) und der geneigten Ebene (31c) nach dem einmaligen Drehen des Drehungsübertragungszahnrads (23) in einer umgekehrten Drehrichtung erreicht.

## Revendications

**1.** Appareil d'imagerie possédant une fonction pour supprimer un flou d'image, comprenant :

un mécanisme pour supprimer le flou d'image, avec une position d'origine définie par une intersection d'un plan X-Y orthogonal à un axe Z d'axe optique de photographie avec l'axe Z, qui calcule, en tant que valeur cible, une quantité de mouvement d'une image en détectant un tremblement d'appareil de prise de vues avec un capteur de détection de tremblement d'appareil de prise de vues (1241), détecte une position réelle d'un dispositif de capture d'image (101) qui forme une image de sujet en utilisant un élément de détection de position (1252), et meut le dispositif de capture d'image (101) pour suivre une image du sujet déplacé par le tremblement d'appareil de prise de vues sur la base d'une différence entre la valeur cible et une quantité de déplacement à partir de la position d'origine, à laquelle le centre optique du dispositif de capture d'image (101) est situé, sur la base de la valeur de détection de l'élément de détection de position (1252) ;
un mécanisme de retenue forcée de position d'origine (1263) prévu dans le mécanisme de suppression, qui fixe mécaniquement le dispositif de capture d'image destiné à être retenu dans la position d'origine ;
le mécanisme de suppression comprend un étage de montage (1251) qui monte le dispositif de capture d'image (101), l'étage de montage étant mû à l'intérieur du plan X-Y par le fonctionnement du mécanisme de suppression, et le mécanisme de retenue forcée de position d'origine (1263) inclut un élément de pression (26) qui entre en contact avec le dispositif de capture d'image (101) le long de la direction d'axe Z à partir d'un côté opposé à un plan d'imagerie du dispositif de capture d'image et fixe le dispositif de capture d'image destiné à être retenu dans la position d'origine, lorsque le mécanisme de suppression n'est pas mis en fonctionnement ;
dans lequel le dispositif de capture d'image (101) est pourvu de l'un d'un trou d'ajustement (19a) ou d'une saillie d'ajustement (33), et l'élément de pression (26) est pourvu de l'autre ; et **caractérisé en ce que** le mécanisme de retenue forcée de position d'origine (1263) comprend une source d'entraînement de rotation (STM1) et un mécanisme de conversion (22) qui est configuré pour convertir un mouvement de rotation de la source d'entraînement de rotation en mouvement linéaire, et l'élément de pression (26) fait partie du mécanisme de conversion et est configuré pour s'éloigner et se rapprocher de l'étage de montage (1251) le long de la direction d'axe Z par l'intermédiaire de la force d'entraînement provenant de la source d'entraînement de rotation (STM1) pour que la saillie d'ajustement (33) s'ajuste de près dans le trou d'ajustement (19a) afin de répondre à la fonction pour mécaniquement retenir l'étage de montage (1251) sur la position d'origine et se sépare du trou d'ajustement (19a) pour libérer l'étage de montage (1251), respectivement.

**2.** Appareil d'imagerie possédant une fonction pour supprimer le flou d'image selon la revendication 1, dans lequel au moins l'un du trou d'ajustement (19a) et de la saillie d'ajustement (33) comprend une forme effilée.

**3.** Appareil d'imagerie possédant une fonction pour le flou d'image selon la revendication 1, dans lequel le mécanisme de conversion (22) comprend un arbre à mouvement alternatif (24) qui s'étend dans la direction d'axe Z vers l'extérieur d'une paroi de circonférence d'un carter de fixation, et est prévu de manière déplaçable dans la direction d'axe Z, une roue dentée de transfert de rotation (23) capable de transférer une force de déplacement dans la direction d'axe Z à l'arbre à mouvement alternatif (24), qui est supporté de façon rotative par l'arbre à mouvement alternatif et entre en prise avec une roue dentée de sortie (21) attachée à la source d'entraînement de rotation, et une goupille à came (32) qui peut être mise en contact avec la roue dentée de transfert de rotation (23) et s'étend dans la direction d'axe Z, la roue dentée de transfert de rotation (23) est pourvue d'une rainure à came (31) qui s'étend dans la direction circonférentielle et se creuse dans la direction d'axe Z afin de recevoir la goupille à came (32), la rainure à came (31) comprend un plan de crête plat (31b) et un plan de plancher de creux plat (31a), chacun possédant une profondeur différente de la rainure à came, un plan incliné (31c) qui s'incline en continu à partir du plan de plancher de creux plat (31a) vers le plan de crête plat (31b) et une paroi de contact (31f) qui s'élève dans la direction d'axe Z dans une position de limite entre le plan de crête plat (31b) et le plan de plancher de creux plat (31a), et l'élément de pression (26) s'étend le long du plan X-Y et est attaché à l'arbre à mouvement alternatif (24).

**4.** Appareil d'imagerie possédant une fonction pour le flou d'image selon la revendication 3, dans lequel le mécanisme de suppression met en rotation la roue dentée de transfert de rotation (23) seulement dans une direction de rotation normale où la goupille à came (32) glisse sur le plan incliné (31c) à partir du plan de plancher de creux plat (31a) jusqu'au plan de crête plat (31b) pour l'opération de fixation du dispositif de capture d'image (101) destiné à être retenu par le mécanisme de retenue forcée de position d'origine (1263) et l'opération de libération de retenue.

**5.** Appareil d'imagerie possédant une fonction pour supprimer le flou d'image selon la revendication 2 ou la revendication 4, dans lequel le mécanisme de retenue forcée de position d'origine (1263) fixe le dispositif de capture d'image (101) lorsque la goupille à came (32) est en contact avec le plan de plancher de creux plat (31a) de la rainure à came (33) et libère le dispositif de capture d'image (101) lorsque la goupille à came (32) est en contact avec le plan de crête plat (31b).

**6.** Appareil d'imagerie possédant une fonction pour supprimer le flou d'image selon l'une quelconque des revendications 3 à 5, dans lequel le mécanisme de suppression réalise le processus de remise à l'état initial qui met en rotation la roue dentée de transfert de rotation (23) dans la direction de rotation normale jusqu'à ce que la goupille à came 932) atteigne une position de début d'inclinaison (31e) d'une limite entre le plan de plancher de creux plat (31a) et le plan incliné (31c) après la mis en rotation de la roue dentée de transfert de rotation (23) une fois dans une direction de rotation inverse.

# FIG. 1

# FIG. 2

# FIG. 3

# FIG. 4A

| FIG. 4 | FIG. 4A |
|---|---|
| | FIG. 4B |
| | FIG. 4C |

LENS BARREL UNIT 7

| ZOOM OPTICAL SYSTEM 71 | FOCUS OPTICAL SYSTEM 72 | APERTURE STOP UNIT 73 | MECHANICAL SHUTTER UNIT 74 |
|---|---|---|---|
| ZOOM LENS 71a | FOCUS LENS 72a | APERTURE STOP 73a | MECHANICAL SHUTTER 74a |

1263

RETENTION

1251

101 CCD

CCD STAGE

| ZOOM MOTOR | FOCUS MOTOR | APERTURE STOP MOTOR | MECHANICAL SHUTTER MOTOR |
|---|---|---|---|

71b 72b 73b 74b

1255

ACTUATOR

MOTOR DRIVER 75

1153 1152 1151

MICROPHONE — MICROPHONE AMP — SOUND RECORDING CIRCUIT

1163 1162 1161

SPEAKER — AUDIO AMP — SOUND REPRODUCING CIRCUIT

# FIG. 4B

EP 1 791 350 B1

# FIG. 4C

24

# FIG. 5

GENERAL OPERATION OF DIGITAL CAMERA

# FIG. 6A

# FIG. 6B

# FIG. 7

# FIG. 8

# FIG. 9A

# FIG. 9B

# FIG. 10

# FIG. 11

# FIG. 12A

# FIG. 12B

# FIG. 13A

# FIG. 13B

# FIG. 13C

# FIG. 13D

# FIG. 13E

# FIG. 14A

# FIG. 14B

# FIG. 15

# FIG. 16

# FIG. 17

# FIG. 18A

# FIG. 18B

# FIG. 18C

# FIG. 19

# FIG. 20

◎RESET

| ROTATION DIRECTION | 200PPS |
|---|---|
| CCW | 2 PULSES |

↓

| ROTATION DIRECTION | 1000PPS |
|---|---|
| CCW | 33 PULSES |

↓

| ROTATION DIRECTION | 200PPS |
|---|---|
| CW | 2 PULSES |

53 msec — S1

◎RELEASE

| ROTATION DIRECTION | 200PPS |
|---|---|
| CW | 2 PULSES |

↓

| ROTATION DIRECTION | 1000PPS |
|---|---|
| CW | 28 PULSES |

| HOLD | 5msec |
|---|---|

43 msec — S2

◎RETENTION

| ROTATION DIRECTION | 200PPS |
|---|---|
| CW | 2 PULSES |

↓

| ROTATION DIRECTION | 1000PPS |
|---|---|
| CW | 3 PULSES |

| HOLD | 5msec |
|---|---|

18 msec — S3

# FIG. 21

# FIG. 22

# FIG. 23

SUPPRESSION CONTROL
INITIAL SETTING — S1

↓

SET Vr1', Vr2' — S2

↓

COMPLETE SETTING — S3

# FIG. 24

START CONTROL

↓

READ CONTROL
TARGET VALUE A — S11

↓

READ POSITION DATA B — S12

↓

COMPARE TARGET VALUE AND
POSITION DATA C=B-A — S13

↓

SET Vdac1, Vdac2 OF IC1
OUTPUT VOLTAGE FROM C — S14

↓

COMPLETE
CONTROL? — S15 — NO

↓ YES

COMPLETE FUNCTION — S16

48

# FIG. 25

## FIG. 26

| | |
|---|---|
| IMAGE BLUR SUPPRESSION BUTTON ON | S1 |
| GYRO SENSOR POWER ON | S2 |
| PRESS RELEASE 1/ COMPLETE RELEASE 1 PROCESS | S3 |
| RELEASE CCD STAGE START CCD CENTRAL RETENTION CONTROL | S4 |
| CamShake_Start Monitoring() | S5 |
| CONTINUE RELEASE 1? — NO | S6 |
| YES | |
| PRESS RELEASE 2? — NO | S7 |
| YES | |
| START FOLLOWING OF CCD | S8 |
| EXPOSURE | S9 |
| COMPLETE EXPOSURE | S10 |
| COMPLETE FOLLOWING OF CCD START CCD CENTERING | S11 |
| COMPLETE CENTERING? — NO | S12 |
| YES | |
| DOCKING CCD STAGE | S13 |

# FIG. 27

FULL PRESSING TIMING CHART

| | |
|---|---|
| RELEASE 1 | NOT PRESSED / PRESSED |
| RELEASE 2 | NOT PRESSED / PRESSED |
| STILL IMAGE EXPOSURE | NOT EXPOSED / EXPOSED |
| FOCUSING OPERATION | NOT OPERATED / OPERATED |
| RETENTION MECHANISM (1263) | FASTENED / RELEASED |
| COIL (COL1", COL2") | NOT DISTRIBUTED / DISTRIBUTED |
| CCD CONTROL (MOUNTING STAGE 15) | NOT CONTROLLED / RETAINED IN CENTER / CORRECTION 1 / CORRECTION 2 |
| LCD (LCD MONITOR 10) | NOT ILLUMINATED / ILLUMINATED |

EP 1 791 350 B1

# FIG. 28

RELEASE 1 RELEASING PROCESS TIMING CHART

| RELEASE 1 | NOT PRESSED<br>PRESSED |
| FOCUSING OPERATION | NOT OPERATED<br>OPERATED |
| RETENTION MECHANISM<br>(1263) | FASTENED<br>RELEASED |
| COIL (COL1", COL2") | NOT DISTRIBUTED<br>DISTRIBUTED |
| CCD CONTROL<br>(MOUNTING STAGE 15) | NOT CONTROLLED<br>RETAINED IN CENTER<br>CORRECTION 1<br>CORRECTION 2 |

EP 1 791 350 B1

## FIG. 29

FULL-PRESSING AT ONE SHOT TIMING CHART

| | | |
|---|---|---|
| RELEASE 1 | NOT PRESSED | |
| | PRESSED | |
| RELEASE 2 | NOT PRESSED | |
| | PRESSED | |
| STILL IMAGE EXPOSURE | NOT EXPOSED | |
| | EXPOSED | |
| FOCUSING OPERATION | NOT OPERATED | |
| | OPERATED | |
| RETENTION MECHANISM (1263) | FASTENED | |
| | RELEASED | |
| COIL (COL1", COL2") | NOT DISTRIBUTED | |
| | DISTRIBUTED | |
| CCD CONTROL (MOUNTING STAGE 15) | NOT CONTROLLED | |
| | RETAINED IN CENTER | |
| | CORRECTION 1 | |
| | CORRECTION 2 | |
| LCD (LCD MONITOR 10) | NOT ILLUMINATED | |
| | ILLUMINATED | |

EP 1 791 350 B1

**EP 1 791 350 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004274242 A
- JP 2004040298 A
- JP H04039616 A
- JP 2001066655 A